# EUROPÄISCHE PATENTANMELDUNG

(11) **EP 4 796 262 A1**
(43) Veröffentlichungstag der Anmeldung: **26.08.2026**
(21) Anmeldenummer: 25159979.1
(22) Anmeldetag: 25.02.2025
(51) Int. Cl.: B25J 5/00, B25J 9/00, B25J 11/00

(54) **BAUROBOTER MIT EINSTELLBARER HUBVORRICHTUNG**

(71) Anmelder: Hilti Aktiengesellschaft, 9494 Schaan (LI)
(72) Erfinder: Kindle, Julien, 9498 Planken (LI); Schmidt, Peer, 88131 Lindau (DE); Schmid, Florian, 9470 Buchs SG (CH); Bralla, Dario, 9470 Buchs (CH); Raczy, Jakub, 9479 Oberschan (CH)
(74) Vertreter: Hilti Aktiengesellschaft Corporate Intellectual Property

(57) **Zusammenfassung**

Ein Bauroboter (1) umfasst eine Basis (10) und eine Funktionsplattform (20). Die Basis (10) weist eine Fahreinheit (11) auf. Die Fahreinheit ist ausgebildet, um den Bauroboter (1) zu bewegen. Die Funktionsplattform (20) ist zur Anordnung eines Werkzeugs (30), insbesondere einer Bohrmaschine, einer Schleifmaschine, Markiermaschine und/ oder einer Schneidemaschine, ausgebildet. Die Basis ist mit der Funktionsplattform (20) über wenigstens eine erste, eine zweite und eine dritte Verbindungsstrebe (40, 50, 60) verbunden. Die erste, zweite und/ oder dritte Verbindungsstrebe (40, 50, 60) sind vorwiegend in eine Längsrichtung (L1, L2, L3) erstreckend ausgebildet. Weiterhin sind die erste, zweite und/ oder Dritte Verbindungsstrebe (40, 50, 60) jeweils über ein Basisgelenk (41, 51, 61) mit der Basis (10) schwenkbar verbunden. Die Basisgelenke (41, 51, 61) spannen an der Basis (10) ein erstes Dreieck (80) aufspannen. Weiterhin sind die erste, zweite und dritte Verbindungsstrebe (40, 50, 60) jeweils über ein Funktionsplattformgelenk (42, 52, 62) mit der Funktionsplattform (20) schwenkbar verbunden. Die Funktionsplattformgelenke (42, 52, 62) an der Funktionsplattform (20) spannen ein zweites Dreieck (81). Die erste, zweite und dritte Verbindungsstrebe (40, 50, 60) umfassen jeweils ein prismatisches Gelenk (43, 53, 63). Die erste, zweite und dritte Verbindungsstrebe (40, 50, 60) bilden jeweils eine kinematische Kette mit mindestens fünf Bewegungsfreiheitsgrade aus, wobei wenigstens einer der mindestens fünf Bewegungsfreiheitsgrade ein aktiv angetriebener Bewegungsfreiheitsgrad ist.

## Beschreibung

Die Erfindung betrifft einen Bauroboter mit einstellbarer Hubvorrichtung, wobei der Bauroboter eine Basis mit einer Fahreinheit und eine Funktionsplattform umfasst. An der Funktionsplattform ist ein Werkzeug zur Bearbeitung eines Gebäudelements angeordnet. Die Hubvorrichtung ist ausgebildet, das Werkzeug an eine Arbeitsposition zu bewegen, um eine Bauarbeit auszuführen. Die Funktionsplattform ist über eine Hubvorrichtung mit der Basis verbunden.

### Stand der Technik

Ein solcher Bauroboter ist beispielsweise in WO2024/156492 bekannt. Der dort beschriebene Bauroboter weist eine Basis auf. An der Basis ist ein Fahrwerk mit vier Räder angeordnet, um den Bauroboter auf einer Bodenfläche zu bewegen. Jedes der Räder ist in geringem Maße höhenverstellbar am Fahrwerk befestigt. An der Basis ist eine Hubvorrichtung angeordnet, die sich im Wesentlichen vertikal von der Basis weg erstreckt. Die Hubvorrichtung ist längenverstellbar, so dass ein an dem von der Basis entferntem Ende der Hubvorrichtung angeordnete Funktionsplattform mit einem Werkzeug in seiner Arbeitshöhe verstellt werden kann.

### Offenbarung der Erfindung

Bauarbeiten weisen allgemein sehr hohe Unfallrisiken auf. Es kommt immer wieder zu schweren Unfällen, beispielsweise im Hochbau oder Tiefbau. Darüber hinaus können manche Arten von Bauarbeiten auf Dauer körperlich sehr belastend für Bauarbeiter sein. Dies betrifft beispielsweise Arbeiten an hohen Decken und allgemein Über-Kopf-Arbeiten.

Um solchen Gefahren zu begegnen sowie auch zur allgemeinen Gesundheitsprävention der Bauarbeiter kommen vermehrt Bauroboter zum Einsatz.

Gerade bei Arbeiten an Decken besteht häufig die Schwierigkeit, eine Baumaschine an eine Arbeitsposition zu steuern, an der eine Bauarbeit, beispielsweise das Bohren eines Bohrlochs, auszuführen ist.

Mithilfe von bisher bekannten Baurobotern können auch Arbeitspositionen in großen Höhen von mehr als 3m erreicht werden. Die führt jedoch dazu, dass zum einen die Hubvorrichtung sich entweder aufgrund Fertigungstoleranzen oder einer nichtgewichtszentrierten Anordnung des Werkzeugs biegt und/ oder neigt, oder die Hubvorrichtung massiv ausgeführt werden muss, um ein Biegen und/ oder neigen zu verhindern. Ein solches Biegen und/ oder neigen bewirkt, dass entweder eine Bodenarbeitsposition, welche vom Roboter angefahren wird und gemäß Position des Bauroboters an der Bodenfläche erreicht ist, nicht mit der Arbeitsposition, welche vom Werkzeug bearbeitet werden soll, übereinstimmt. Somit wird an der angefahrenen Arbeitsposition am Bauteil, z. B. Wand oder Decke nicht vom Werkzeug in beispielsweise 3m oder 5m Höhe bearbeitet. Es herrscht eine Verschiebung oder ein Versatz zwischen einer soll-Arbeitsposition und einer ist-Arbeitsposition.

Aufgabe der vorliegenden Erfindung ist daher, einen leichten Bauroboter mit verbesserten Eigenschaften anzugeben, um Arbeiten an einer Arbeitsposition in Höhen von insbesondere 3m und mehr einfacher auszuführen.

Gelöst wird diese Aufgabe durch einen Bauroboter gemäß den unabhängigen Ansprüchen.

Ein Bauroboter gemäß der Erfindung umfasst eine Basis, welche eine Fahreinheit aufweist. Die Fahreinheit ist demnach zum Bewegen des Bauroboters ausgebildet und dient der Mobilität des Bauroboters. Die Fahreinheit ist vorzugsweise einer Bodenfläche zugeordnet, so dass der Bauroboter auf der Bodenfläche bewegt werden kann. Der Bauroboter umfasst weiter eine Funktionsplattform. Die Funktionsplattform ist zur Anordnung eines Werkzeugs ausgebildet. Die Funktionsplattform ist am Bauroboter an der Seite der Basis angeordnet, welche der Bodenfläche gegenüber liegt.

Die Funktionsplattform und die Basis sind miteinander über wenigstens drei Verbindungsstreben verbunden. Drei, vorzugsweise jede, der wenigstens drei Verbindungsstreben sind vorwiegend in eine Längsrichtung erstreckend ausgebildet. Diese Verbindungsstreben sind länglich ausgeführt. Drei dieser Verbindungsstreben sind jeweils über ein Basisgelenk mit der Basis verbunden. Diese Basisgelenke sind so ausgebildet, dass die jeweilige Verbindungsstrebe schwenkbar zu der Basis verbunden sind. Insbesondere ist das Basisgelenk so an der Basis angeordnet, dass die Verbindungsstrebe von der Bodenfläche weggeschwenkt werden kann. Die Basisgelenke sind an verschiedenen Positionen an der Basis angeordnet, dass sie zueinander ein erstes Dreieck aufspannen.

Diese wenigstens drei der wenigstens drei Verbindungsstreben sind über jeweils ein Funktionsplattformgelenk mit der Funktionsplattform schwenkbar verbunden. Die Funktionsplattformgelenke sind so an der Funktionsplattform angeordnet, dass sie zueinander ein zweites Dreieck aufspannen.

Weiterhin sind diese wenigstens drei Verbindungsstreben so ausgestaltet, dass ihre Längen zwischen Basis und Funktionsplattform in Längsrichtung variabel sind. Dazu weisen diese wenigstens drei Verbindungsstreben jeweils ein prismatisches Gelenk auf.

Nachfolgend wird zur Vereinfachung in der Regel lediglich auf drei Verbindungsstreben, nämlich eine erste, eine zweite und eine dritte Verbindungsstrebe, Bezug genommen und diese beschrieben. Es versteht sich aber, dass der Bauroboter gemäß der Erfindung auch mehr als drei Verbindungsstreben umfassen kann. Lediglich das gesamte kinematische und statische System muss entsprechend der Anzahl an Verbindungsstreben und der damit verbundenen Gelenken angepasst werden. Entsprechend der Vereinfachung ist an der ersten Verbindungsstrebe ein erstes Basisgelenk und ein erstes Funktionsplattformgelenk, an der zweiten Verbindungsstrebe ein zweites Basisgelenk und ein zweites Funktionsplattformgelenk und an dritten Verbindungsstrebe ein drittes Basisgelenk und ein drittes Funktionsplattformgelenk angeordnet. Folglich wird nachfolgend in der Regel lediglich ein erstes prismatisches Gelenk der ersten Verbindungsstrebe, ein zweites prismatisches Gelenk der zweiten Verbindungsstrebe und ein drittes prismatisches Gelenk der dritten Verbindungsstrebe beschrieben, auch wenn der Bauroboter gemäß der Erfindung mehr als drei Verbindungsstreben mit jeweils einem prismatischen Gelenk aufweisen kann.

Das erste, zweite und dritte prismatische Gelenk ist an der ersten, zweiten und dritten Verbindungsstrebe bevorzugt zwischen der Basis und der Funktionsplattform angeordnet. Die erste, zweite und dritte Verbindungsstrebe, der wenigstens drei Verbindungsstreben bilden mit dem jeweiligen ersten, zweiten und dritten Basisgelenk und dem jeweiligen ersten, zweiten und dritten Funktionsplattformgelenk, sowie dem zugehörigen prismatischen Gelenk wenigstens fünf Bewegungsfreiheitsgrade zwischen Basis und Funktionsplattformgelenk aus. Mindestens einer der wenigstens fünf Bewegungsfreiheitsgrade ist ein aktiv angetriebener Bewegungsfreiheitsgrad. Die anderen Bewegungsfreiheitsgrade sind passive Bewegungsfreiheitsgrade.

Ein Bewegungsfreiheitsgrad eines Gelenks ist ein Freiheitsgrad des Gelenks hinsichtlich dessen Bewegung. D.h. es ist damit angegeben, um wieviel Achsen sich ein Gelenk bewegen kann. Dabei ist nicht nur eine rotatorische Bewegung, sondern auch eine translatorische Bewegung um wenigstens eine Achse möglich. Beispielsweise ein Gelenk mit einem Bewegungsfreiheitsgrad kann eine rotatorische Bewegung um eine Achse haben, kann aber auch alternativ eine Längenänderung entlang einer Achse haben.

Ein aktiv angetriebener Bewegungsfreiheitsgrad bedeutet, dass es sich um einen Bewegungsfreiheitsgrad handelt, der manuell oder mittels einer automatischen Antriebsvorrichtung, wie z. B. Motor und/ oder Magnetismus, wie Induktion, Wirbelstrom, angetrieben wird. Somit wird der Freiheitsgrad beaufschlagt, um eine Bewegung des Gelenks zu bewirken.

Ein passiver Bewegungsfreiheitsgrad hingegen ist ein Bewegungsfreiheitsgrad, der nicht mittels Krafteinwirkung zu einer Bewegung getrieben wird. Beispielsweise ein Kippgelenk oder Schwenkgelenk mit nur einem Bewegungsfreiheitsgrad, wie ein Scharnier, würde sich frei um ihre Schwenkachse drehen. Ein passiver Bewegungsfreiheitsgrad kann auch einen Aktuator umfassen, der jedoch ungeachtet Toleranzen und Spielräume keine Bewegung an diesem passiven Bewegungsfreiheitsgrad aus, sondern eine Vorspannkraft am Gelenk und/ oder eine Sicherung des Gelenks in einer bestimmten Position bewirkt wird. Ein solches passives Gelenk ist ausgebildet, sich grundsätzlich der Bewegung des kinematischen Systems bzw. der kinematischen Kette anzupassen (z. B. bei Beaufschlagen des aktiven Gelenks), bietet jedoch eine durch das Bereitstellen der Vorspannkraft verbesserte Stabilität des gesamten Systems des Bauroboters, insbesondere zum Ausgleich, falls beispielswiese durch die Gelenke der Verbindungsstreben ein Spiel insbesondere durch Toleranzen vorhanden wäre. Dazu kann auch vorgesehen sein, dass mehr als ein passives Gelenk mit einem Aktuator versehen ist, die vorzugsweise so ausgeführt sind, dass sie voneinander abhängig sind.

In diesem Dokument sind Richtungen wie auf, über und dergleichen so in der Richtung zu verstehen, dass die Bodenfläche, auf der der Bauroboter im betriebsgemäßen Zustand angeordnet ist, die Grundfläche bildet. Alles in Höhenrichtung von der Bodenfläche weg ist in der Richtungsorientierung nach oben oder über. Entsprechend ist hinsichtlich der Lageposition der Begriff "oberhalb" zu verstehen. Analog dazu sind Begriffe wie "unter", "unterhalb" oder "unten" entsprechend der Richtung zur Bodenfläche hinzulesen.

Im Sinne der vorliegenden Offenbarung ist unter einem Werkzeug insbesondere eine Maschine zur Verwendung auf einer Baustelle zu verstehen. Eine derartige Maschine ist beispielsweise ein sogenanntes Power-Tool wie eine Bohrmaschine, eine Schlagbohrmaschine, ein Bohrhammer, ein Schlagschrauber, eine Schleifmaschine, eine Trennmaschine bzw. Schneidemaschine, eine Markierapparatur zum Ausbringen von Farbe, ein Staubsauger und/ oder eine Spritzapparatur, beispielsweise zum Verteilen von Beton, Spachtelmasse und/ oder Putz.

Eine Verbindungsstrebe im Lichte des vorliegenden Dokuments ist ein länglich ausgebildetes Verbindungselement. Die Verbindungsstrebe kann insbesondere ein stab- bzw. stangenförmiges Element sein. Die Querschnittsfläche senkrecht zur Längserstreckung bzw. Längsrichtung wenigstens einer der Verbindungsstreben kann einen runden Außenumfang oder mehreckig, beispielsweise mit vier, fünf oder sechs Außenecken, ausgebildet sein. In einer Ausgestaltung ist das Außenumfangsprofil der Querschnittsfläche und T-, U oder Doppel-T-förmig ausgebildet

Das Querschnittsprofil der Querschnittsfläche senkrecht zur Längserstreckung bzw. Längsrichtung kann als Vollmaterial oder als mit wenigstens einer Öffnung im Vollmaterial ausgeführt sein. Die Öffnung kann sich dabei in Längsrichtung durchgehend erstrecken und somit ein die Verbindungsstrebe als Rohr ausbilden. Sind mehrere Öffnungen ausgebildet, können diese als Kammer ausgeführt sein. Für eine Verbindungsstrebe kommen unterschiedliche Werkstoffe in Betracht, beispielsweise Kunststoff, Metall, insbesondere Aluminium, Eisen oder Stahl oder eine Legierung davon, Drahtwerkstoff und/ oder Seilwerkstoff ausgebildet sein. Wenigstens eine der Verbindungsstreben kann als Draht oder Seil bereitgestellt sein. Die Verbindungsstrebe kann starr, flexibel oder elastisch ausgebildet sein.

Als Gelenk mit einem Bewegungsfreiheitsgrad sind insbesondere sogenannte "revolute joints", d. h. beispielsweise ein Schwenkgelenk, oder ein "prismatic joint" (prismatisches Gelenk). Schwenkgelenke lassen sich um eine Schwenkachse nur innerhalb eines bestimmten Drehwinkelbereichs rotieren oder sind unbeschränkt um ihre Schwenkachse drehbar. Prismatische Gelenke hingegen weisen primär keine Drehachse auf, sondern bieten eine Längenvariabilität. Am Beispiel einer Verbindungsstrebe mit prismatischem Gelenk kann ihre Länge in eine Längsrichtung verändert werden.

Ein Gelenk mit zwei Bewegungsfreiheitsgrade sind in der Regel eine Kombination aus zwei Schwenkgelenke, deren jeweilige Schwenkachse nicht koaxial zueinander verlaufen. Ein besonderes Gelenk ist dabei ein Kardan-Gelenk. Ein Kardan-Gelenk weist zwei Schwenkachsen auf, die Senkrecht zueinander verlaufen und sich kreuzen. Gelenke mit drei Bewegungsfreiheitsgrade werden auch "universal joints" genannt.

Ein Gelenk mit drei Bewegungsfreiheitsgrade kann eine Kombination o. g. Gelenke sein, womit sich in Summe und bei ganzheitlicher Betrachtung drei Bewegungsfreiheitsgrade ergeben, beispielsweise drei Schwenkgelenke oder ein Schwenkgelenk und ein Universal Joint. Weiterhin kann ein sphärisches Gelenk als Gelenk mit drei Bewegungsfreiheitsgraden verwendet werden. Ein Beispiel für ein sphärisches Gelenk ist ein Kugelgelenk.

Das durch das erste, zweite und dritte Basisgelenk gebildete erste Dreieck ist so zu verstehen, dass die diese Basisgelenke an unterschiedlichen Orten angeordnet sind und sich nicht überlappen. Im einfachsten Fall ist das erste Dreieck so zu verstehen, dass bei betriebsbereitem Bauroboter die Funktionsplattform über der Basis angeordnet ist. Bei Projektionsansicht von oben in vertikaler Richtung zur Bodenfläche würde sich das erste Dreieck entsprechend ausbilden. Analoge Betrachtung gilt für das durch das, zweite und dritte zweite Funktionsplattformgelenk gebildete erste Dreieck.

Die Längsrichtung der Verbindungsstreben ist die Haupterstreckungsrichtung der Verbindungsstreben. Vorliegend ist dies auch die Richtung, in der sich die Verbindungsstreben von der Basis zur Funktionsplattform erstrecken und umgekehrt.

Das erste und oder zweite Dreieck können ein gleichschenkliges Dreieck, vorzugsweise ein gleichseitiges Dreieck bilden.

Der Begriff Position beschreibt eine Ortsangabe in x, y und z-Richtung, wobei die x-y-Richtung durch die im Wesentlichen vorherrschende Flächenerstreckung der Bodenfläche bestimmt wird, wohingegen die z-Richtung eine vertikale Richtung, senkrecht zur Bodenfläche, ist.

Der Begriff Lage beschreibt eine Ausrichtung von zwei Objekten zueinander, wobei es sich hierbei um eine Neigung der zwei Objekten handelt.

Wenigstens ein Bewegungsfreiheitsgrad, vorzugsweise alle Bewegungsfreiheitsgrade, eines Basisgelenks und/ oder eines Funktionsplattformgelenks sind rotatorisch, d.h. sie ermöglichen eine rotatorische Bewegung, beispielsweise Schwenken. Die rotatorische Bewegung kann vollständig umlaufend oder auf einen bestimmten Winkelbereich beschränkt sein.

Die kinematischen Ketten der ersten, zweiten und dritten Verbindungsstrebe mit jeweils fünf Bewegungsfreiheitsgraden in ihrer oben genannten Anordnung der jeweiligen Basisgelenke und Funktionsplattformgelenke bewirken, dass die Verbindungsstreben sich so weit in ihrer Bewegung stützen, dass ein statisch und dynamisch bestimmtes System gebildet wird. Insbesondere wird verhindert, dass eines der Gelenke einknickt und/ oder der Abstand zwischen Funktionsplattform und Basis ungewollt abnimmt. Das System aus drei Verbindungsstreben, den zugeordneten Basis- und Funktionsplattformgelenken und jeweiligem prismatischen Gelenk stellen mit der Funktionsplattform und der Basis ein stabiles System dar.

Eine aktive Änderung an einem Bewegungsfreiheitsgrad eines der Verbindungsstreben bewirkt eine Änderung der Position der Funktionsplattform relativ zur Basis. Zudem ist je nach Ausprägung der aktiven Änderung eine Änderung in der Lage der Funktionsplattform relativ zur Basis erkennbar. Die Funktionsplattform bewegt sich gegenüber der Basis im sechs-dimensionalen Raum (6DoF). Insbesondere ändern sich die Position und Lage der Funktionsplattform gegenüber der Basis dabei entlang eines eindimensionalen Unterraums (geometrisch eine Kurve) des sechsdimensionalen Raums der Positionen und Lagen. Wird ein Bewegungsfreiheitsgrad von zwei Verbindungsstreben geändert, so ändert sich Position und Lage der Funktionsplattform gegenüber der Basis innerhalb eines zweidimensionalen Unterraums (geometrisch einer Fläche) desselben sechsdimensionalen Raums. Wird ein Bewegungsfreiheitsgrad von drei Verbindungsstreben geändert, so ändern sich Position und Lage der Funktionsplattform gegenüber der Basis innerhalb eines dreidimensionalen Unterraums (geometrisch einer dreidimensionalen Mannigfaltigkeit) des sechsdimensionalen Raums der Positionen und Lagen.

Mithilfe der Erfindung ist es somit möglich, mit einfacher Konstruktion einen Bauroboter zu realisieren, der vielseitig die Lage und Position seiner Funktionsplattform relativ zur Basis anpassen kann. Dadurch lassen sich für das Werkzeug auch Arbeitspositionen in großer Höhe anfahren, ohne dass Nachteile in der Stabilität des Bauroboters erkennbar sind. Zudem lässt sich die Funktionsplattform in einem sehr großen Wirkraum verfahren, so dass der Wirkbereich vergrößert ist und die Basis des Bauroboters nicht so häufig verfahren werden muss. Es ist damit auch eine größere Arbeitsgeschwindigkeit möglich. Die Möglichkeit der Anpassung der Lage ermöglicht zudem eine genaue Ausrichtung der Lage und Positionierung des Werkzeugs zur Arbeitsposition, so dass eine zielgeführte Bearbeitung der Arbeitsposition nunmehr möglich ist. Ein schräg gestelltes bzw. geneigtes Werkzeugs wegen ungewollter Neigung der Funktionsplattform wäre aussteuerbar. Zudem ist gegenüber dem Stand der Technik mit lediglich einer Säule als Hubvorrichtung die statische und dynamische Stabilität durch die Verbindungsstreben verbessert.

In einer Ausführung ist vorgesehen, dass der Bauroboter genau drei Verbindungsstreben, nämlich die erste, zweite und dritte Verbindungsstrebe, aufweist.

Vorzugsweise weisen alle Verbindungsstreben fünf Bewegungsfreiheitsgrade auf. Der Bauroboter ist damit ausreichend statisch und dynamisch bestimmt. Somit ist eine einfache Konstruktion des Bauroboters mit Basis und Funktionsplattform gegeben. Dabei weisen die erste, zweite und dritte Verbindungsstrebe jeweils drei, insbesondere vier, passive Bewegungsfreiheitsgrade und einen bzw. zwei aktive Bewegungsfreiheitsgrade auf.

In einer Ausführung ist vorgesehen, dass ein prismatisches Gelenk der ersten, zweiten und/ oder dritten Verbindungsstrebe so ausgebildet ist, dass sich die entsprechende Verbindungsstrebe in ihrer Längsrichtung mittels Ausziehens verändern kann. Dazu kann das prismatische Gelenk als Teleskopgelenk ausgebildet sein. Das Teleskopgelenk ist in einer Variante mehrteilig, so dass die Teile (Abschnitte) ineinander verschiebbar ausgebildet sind. Sowohl bei manueller als auch bei automatischer Beaufschlagung ist eine Längenänderung der entsprechenden Verbindungsstrebe einfach realisierbar und konstruktiv sehr einfach zu realisieren. Hierzu können zusätzlich beide Abschnitte über ein Lager, beispielsweise ein Kugellager, gelagert sein. Mit einem Teleskopgelenk lassen sich große Auslenkungen, d. h. Längenänderungen realisieren.

In einer Ausführung ist wenigstens eine Verbindungsstrebe, insbesondere die erste, zweite und/ oder dritte Verbindungsstrebe, vorzugweise alle Verbindungsstreben, stab- oder stangenförmig ausgebildet. Damit lässt sich ein stabiler und gleichzeitig leichter Aufbau realisieren. Zudem sind stab- oder stangenförmige Ausgestaltungen in sich biegesteif und knickfest.

Die Fahreinheit des Bauroboters kann ein Fahrwerk mit wenigstens zwei Kugeln, zwei Rollen, Reifen und/ oder eine Ketteneinheit für den Kontakt zur Bodenfläche aufweisen. Weiterhin ist vorzugsweise eine Antriebseinheit für den Antrieb von wenigstens einer Rolle, eines Reifens und/ oder der Ketteneinheit vorgesehen. Als Antrieb kann ein Motor, vorzugsweise jedoch mehrere Motoren vorgesehen sein, wobei bevorzugt je Rolle, Reifen und/ oder Ketteneinheit ein Motor vorgesehen ist. Weiterhin kann auch ein sogenannter Omnidrive mit angetriebenen Kugeln oder sogenannte Omni-Wheels mit kleineren Rollen auf den angetriebenen Rollen vorgesehen sein.

In einer Ausführungsform des Bauroboters ist vorgesehen, dass das erste Basisgelenk an der ersten Verbindungsstrebe, das zweite Basisgelenk an der zweiten Verbindungsstrebe und/ oder das dritte Basisgelenk an der dritten Verbindungsstrebe als Gelenk mit drei Bewegungsfreiheitsgraden, insbesondere als sphärisches Gelenk, beispielsweise ein Kugelgelenk, ausgebildet ist. Ein Gelenk mit drei Bewegungsfreiheitsgraden kann auch durch drei Schwenkgelenke ausgebildet sein, wobei keine der Schwenkachsen koaxial zu einer anderen der Schwenkachsen der drei Schwenkgelenke ausgerichtet ist.

In einer Ausführungsform weist der Bauroboter an wenigstens einer, vorzugsweise an wenigstens drei Verbindungsstreben mehr als fünf Bewegungsfreiheitsgrade auf. Bei fünf Bewegungsfreiheitsgraden ist bevorzugt ein Bewegungsfreiheitsgrad aktiv angetrieben, vier sind passiv ausgeführt. Sind dabei zwei aktiv angetrieben, so ist insbesondere einer der beiden aktiven Bewegungsfreiheitsgrade von dem anderen abhängig, damit keine Spannungskollision innerhalb des kinematischen Systems des Bauroboters und insbesondere innerhalb der kinematischen Kette der entsprechenden Verbindungsstrebe vorherrscht. Dies könnte bis zu einem Versagen der Verbindungsstreben führen.

Bei mehr als fünf Bewegungsfreiheitsgrade der ersten, zweiten und/ oder dritten Verbindungsstrebe sind vorzugsweise wenigstens zwei der Bewegungsfreiheitsgrade aktiv angetrieben. Beispielsweise könnte die erste, zweite und/ oder dritte Verbindungsstrebe ein weiteres Gelenk mit einer Schwenkachse umfassen. Vorteilhaft verläuft die Schwenkachse des weiteren Gelenks nicht koaxial zu einer Schwenkachse eines der anderen angeordneten Gelenke der Verbindungsstrebe. Das Vorsehen von mehr Bewegungsfreiheitsgraden ermöglicht eine mehrstufige Positions- und Lageänderung der Funktionsplattform gegenüber der Basis. Insbesondere kann die Einstellung in eine Grobeinstellung und eine Feineinstellung unterteilen sein, so dass eine schnelle und genaue Positionierung und Lageanpassung der Funktionsplattform möglich sind. Darüber hinaus ist je nach Konfiguration und Ausrichtung der Gelenke eine größere Rotationsfähigkeit der Funktionsplattform möglich. Somit lässt sich das Werkzeug unabhängig der Position des Bauroboters durch Drehen der Funktionsplattform möglichst nahe an eine Arbeitsposition heranbringen. Beispielsweise Deckenarbeiten nahe an einer Wand sind einfach realisierbar, ohne den Bauroboter selbst zu bewegen oder eine andere Konstruktion zu wählen.

In einer Ausführungsform ist die Fläche des ersten Dreiecks größer als die Fläche des zweiten Dreiecks. Die Verbindungsstreben bilden damit eine pyramidenstumpfförmige Verbindung zwischen Basis und Funktionsplattform, wobei die Grundfläche des Pyramidenstumpfes als das erste Dreieck an der Basis ausgebildet ist und die Deckfläche durch das kleinere, zweite Dreieck ausgebildet ist. Damit lässt sich eine besonders stabile Verbindung zwischen Funktionsplattform und Basis gewährleisten.

Vorzugsweise beträgt die Fläche des zweiten Dreiecks mehr als 10% der Fläche des ersten Dreiecks. Dies trägt zur Verwindungssteifigkeit der Verbindung zwischen Basis und Funktionsplattform bei.

In einer Ausgestaltung beträgt kein Innenwinkel des ersten und zweiten Dreiecks weniger als 15°, insbesondere nicht weniger als 25°. Diese Ausgestaltung trägt ebenfalls zur verbesserten Stabilität des der Verbindungsstreben miteinander bei.

In einer Ausführungsform sind die Eckpunkte des ersten Dreiecks in einem ersten Randbereich an der Basis angeordnet. Der erste Randbereich der Basis ist ein Abstandsbereich von einer ersten Randlinie der Basis. Die erste Randlinie der Basis ergibt sich bei horizontaler Anordnung des Bauroboters an einer horizontal erstreckenden Bodenfläche durch eine Projektion der Basis senkrecht zur Bodenfläche und der dadurch gebildeten Kontur der Basis.

Der erste Randbereich erstreckt sich in einer Ausführungsform von der ersten Randlinie um maximal 50% zum geometrischen Schwerpunkt der Projektionsfläche der Basis, vorzugsweise um maximal 30% und insbesondere um 20%. Somit können die Basisgelenke ein ausreichend großes erstes Dreieck ausbilden, um dem Bauroboter eine ausreichend gute Stabilität zu gewährleisten und gleichzeitig eine gute Beweglichkeit der Funktionsplattform in Lage und Position zu ermöglichen.

In einer Ausführungsform sind die Eckpunkte des zweiten Dreiecks in einem zweiten Randbereich zur Funktionsplattform angeordnet. Der zweite Randbereich der Funktionsplattform ist ein Abstandsbereich von einer zweiten Randlinie der Funktionsplattform. Die zweite Randlinie der Funktionsplattform ergibt sich bei horizontaler Lage der Funktionsplattform durch eine Projektion der Funktionsplattform senkrecht zu einer horizontal erstreckenden Bodenfläche und der dadurch gebildeten Kontur des Funktionsplattform.

Der zweite Randbereich ist in einer Ausführungsform die Randlinie der Funktionsplattform. In einer Ausgestaltung erstreckt sich der zweite Randbereich von der zweiten Randlinie um 50% des Abstands von der Randlinie der Funktionsplattform zum geometrischen Schwerpunkt der Projektionsfläche. In einer bevorzugten Ausgestaltung erstreckt sich der zweite Randbereich um maximal 30%, insbesondere 15%, des Abstands von der zweiten Randlinie der Funktionsplattform zum geometrischen Schwerpunkt der Projektionsfläche der Funktionsplattform von der zweiten Randlinie. Somit können die Funktionsplattformgelenke gut an der Funktionsplattform angeordnet sein. Gleichzeitig wird ein ausreichend großes zweites Dreieck gebildet, um Kräfte von der Funktionsplattform und Kräfte von den Verbindungsstreben aufzunehmen und entsprechend abzuleiten, ohne dass die Funktionsplattformgelenke selbst einer zerstörenden Kraft ausgesetzt sind. Insbesondere ist damit auch eine gute Anpassung der Lage und Position der Funktionsplattform durch dir Verbindungsstreben einfach möglich.

In einer Ausführungsform ist der Bauroboter ausgebildet, dass das erste, zweite und/ oder dritte Basisgelenk als Gelenk mit drei Bewegungsfreiheitsgraden, insbesondere sphärisches Gelenk, ausgebildet sind. Vorzugsweise sind alle Basisgelenke an der ersten, zweiten und dritten Verbindungsstrebe als sphärisches Gelenk ausgebildet. In einer Ausführung ist jeweils als sphärisches Gelenk ein Kugelgelenk vorgesehen. Ein derartiger Aufbau in der Konfiguration des ersten, zweiten und dritten Basisgelenks hat den Effekt, dass das Kugelgelenk als Gelenk mit drei Bewegungsfreiheitsgraden die von der Funktionsplattform über die erste, zweite und dritte Verbindungsstrebe abgeleitete Gewichtskraft und ggf. weitere Kraft aufgrund der auszuführenden Bauarbeit effektiv aufgenommen wird und auf die Basis abgeleitet wird. Zudem ist vorzugsweise als erstes, zweites und drittes Funktionsplattformgelenk ein Scharniergelenk vorgesehen. Diese Konfiguration des ersten, zweiten und dritten Funktionsplattformgelenks bewirkt eine höhere Steifigkeit der Verbindung zwischen Funktionsplattform und Basis, da an der Funktionsplattform die jeweilige Verbindungsstrebe nur um eine Achse schwenkbar angeordnet ist.

In einer Ausführungsform weist der Bauroboter an wenigstens einer der ersten, zweiten und dritten Verbindungsstrebe, vorzugsweise an allen Verbindungsstreben, als erstes, zweites bzw. drittes Funktionsplattformgelenk jeweils ein Gelenk mit einem Bewegungsfreiheitsgrad auf. Ein solches Gelenk mit einem Bewegungsfreiheitsgrad ist bevorzugt ein Scharniergelenk. Die Schwenkachse des entsprechenden ersten, zweiten und/ oder dritten Funktionsplattformgelenks erstreckt sich jeweils in einer bevorzugten Ausgestaltung senkrecht zur Längserstreckung der jeweiligen Verbindungsstrebe, wenigstens des Abschnitts der entsprechenden Verbindungsstrebe, an dem das betreffende Funktionsplattformgelenk angeordnet ist.

In einer Ausführungsform ist vorgesehen, dass der Bauroboter als Verbindungsstreben zwischen der Basis und der Funktionsplattform lediglich die erste, zweite und dritte Verbindungsstrebe aufweist. Das erste Basisgelenk, das zweite Basisgelenk und das dritte Basisgelenk sind jeweils als Kugelgelenk ausgebildet sind. Das erste, zweite und dritte Funktionsplattformgelenk sind jeweils als Scharniergelenk ausgebildet, wobei die Schwenkachsen des ersten Funktionsplattformgelenks, des zweiten Funktionsplattformgelenks und dritten Funktionsplattformgelenks senkrecht zur Längserstreckung der jeweiligen erste, zweiten und dritten Verbindungsstrebe und parallel zum aufgespannten zweiten Dreieck ausgerichtet sind. Das erste prismatische Gelenk der ersten Verbindungsstrebe ist zwischen dem ersten Basisgelenk und dem ersten Funktionsplattformgelenk angeordnet, das zweite prismatische Gelenk der zweiten Verbindungsstrebe ist zwischen dem zweiten Basisgelenk und dem zweiten Funktionsplattformgelenk und das dritte prismatische Gelenk der dritten Verbindungsstrebe ist zwischen dem dritten Basisgelenk und dem dritten Funktionsplattformgelenk angeordnet. Eine Gelenkachse des ersten, zweiten und dritten prismatischen Gelenks erstreckt entsprechend der Längsrichtung der ersten, zweiten bzw. dritten Verbindungsstrebe. Diese Konfiguration führt zu einem statischen und kinematischen System des Bauroboters, so dass die Funktionsplattform sicher und schnell positioniert und in ihrer Lage eingestellt werden kann. Eine entsprechende Ansteuerung ist einfach zu realisieren.

In einer kombinierten Ausführungsform weist der Bauroboter eine stabförmige erste Verbindungsstrebe, eine stabförmige zweite Verbindungsstrebe und eine stabförmige dritte Verbindungsstrebe auf. Ein erstes Funktionsplattformgelenk der ersten Verbindungsstrebe, ein zweites Funktionsplattformgelenk der zweiten Verbindungsstrebe und ein drittes Funktionsplattformgelenk der dritten Verbindungsstrebe ist jeweils als Scharniergelenk mit einem Freiheitsgrad ausgebildet. Ein erstes Basisgelenk der ersten Verbindungsstrebe, ein zweites Basisgelenk der zweiten Verbindungsstrebe und ein drittes Basisgelenk der dritten Verbindungsstrebe sind jeweils als Kugelgelenk mit drei Freiheitsgraden ausgebildet ist. Ein erstes prismatisches Gelenk der ersten Verbindungsstrebe ist als erster Teleskopauszug mit einem ersten Teleskopantrieb, ein zweites prismatisches Gelenk der zweiten Verbindungsstrebe ist als zweiter Teleskopauszug mit einem zweiten Teleskopantrieb und ein drittes prismatisches Gelenk der dritten Verbindungsstrebe ist als dritter Teleskopauszug mit einem dritten Teleskopantrieb ausgebildet. Somit ist auf ein einfacher jedoch ausreichend stabiler und kinematisch bestimmter Bauroboter realisiert. Zudem lassen Teleskopauszüge eine größere Längenänderung in vereinfachter Bauform zu. Mit einem Teleskopauszug sind größere Höhen realisierbar. Außerdem ist mithilfe des Teleskopauszugs eine hohe Stabilität des prismatischen Gelenks möglich.

In einer zur vorangehend genannten Ausführungsform alternativen Konfiguration umfasst der Bauroboter drei Verbindungsstreben. Jede der Verbindungsstreben weist als Basisgelenk und als Funktionsplattformgelenk ein Universal Joint, d.h. ein Gelenk mit zwei Bewegungsfreiheitsgraden, insbesondere ein Kardangelenk, auf. Solch eine Konfiguration hat je nach Anordnung der Universal Joints zueinander entweder eine Sperrung der Rotation oder der Position der Funktionsplattform zur Folge. Dies ermöglicht, ausschließlich die Position oder Rotation der Funktionsplattform zu steuern, um entweder eine ungewollte Änderung der Lage oder eine ungewollte Änderung der Position der Funktionsplattform, insbesondere eine Verschiebung relativ zur Basis, zu vermeiden.

In einer bevorzugten Ausführungsform sind das erste, zweite und/ oder dritte prismatische Gelenk als aktives Gelenk ausgebildet. Dies bietet insbesondere den Vorteil, dass eine Längenänderung der einzelnen Verbindungsstrebe(n) und damit ausgeprägt eine Höhenänderung der Funktionsplattform gegenüber der Basis einfach realisiert und gesteuert werden kann. Außerdem wird eine signifikante Verstellung der Höhe, d.h. eine Verstellung des Abstands der Funktionsplattform zur Basis, ermöglicht, um beim Bewegen des Bauroboters Objekten an der Decke auszuweichen. Dies hat zur Folge, dass das System zum Transport eingefahren eine kompakte Größe annehmen kann und trotzdem in der Lage ist, Arbeitspositionen in signifikanter Höhe an Decken oder an Wände zu erreichen.

In einer Ausgestaltung weist der Bauroboter an der Funktionsplattform eine Befestigungsschnittstelle auf, an der ein Endeffektor mit einem Werkzeug angeordnet werden kann. Alternativ kann das Werkzeug direkt an der Befestigungsschnittstelle angeordnet werden. Die Befestigungsschnittstelle ist zur mechanischen und/ oder elektrischen Verbindung zwischen Funktionsplattform und Endeffektor und/ oder Werkzeug ausgebildet. Die Befestigungsschnittstelle kann als Universalschnittstelle ausgebildet sein, und zur Verbindung mit einer Vielzahl von Arten von Werkzeugen und/ oder Endeffektoren ausgebildet sein. Die Befestigungsschnittstelle kann Rastverbindungen, Klemmen und/ oder Haken aufweisen, die in korrespondierende Bauteile am Endeffektor und/ oder Werkzeug in Eingriff gebracht werden können. Weiterhin kann die Befestigungsschnittstelle elektrische Kontakte aufweisen, beispielsweise zur Energieversorgung und/ oder zur Kommunikation zwischen einer Steuerung und/ oder zentralen Energieversorgung des Bauroboters und des Endeffektors und/ oder Werkzeugs. Die Befestigungsschnittstelle kann als Wechselschnittstelle ausgebildet sein, um einen insbesondere automatischen Wechsel von Werkzeug und/ oder Endeffektor für unterschiedliche Bauaufgaben zu ermöglichen.

In einer Ausführungsform weist der Bauroboter einen Aktuator auf, um die Funktionsplattform relativ zur Basis zu bewegen, insbesondere die Lage der Funktionsplattform zu ändern. In eines Ausführungsform kann vorgesehen sein, dass der Aktuator ausgebildet ist, Funktionsplattform zu drehen. D. h. die Position und Lage der Funktionsplattform bleiben im Wesentlichen gleich, jedoch verändert sich im Wesentlichen ihre Ausrichtung. Dabei kann eine Drehachse beispielswiese eine Normale zum zweiten Dreieck sein. Weiterhin kann die Funktionsplattform im Wesentlichen zweiteilig, aufgeteilt in zwei Ebenen, ausgebildet sein, nämlich eine erste Ebene, welche durch das zweite Dreieck bestimmt ist und eine zweite Ebene, an welcher der Endeffektor und/ oder das Werkzeug angeordnet sind, wobei vorzugsweise die Lage der zweiten Ebene relativ zur ersten Ebene mittels des Aktuators geändert werden kann. Dazu weist beispielsweise die Funktionsplattform eine Grundplattform auf, die Teil der ersten Ebene ist und das zweite Dreieck umfasst. Weiterhin weist die Funktionsplattform eine Befestigungsplattform auf, die über einen Bewegungsmechanismus zur Grundplattform beweglich mit dieser verbunden ist. Der Aktuator ist ausgebildet, den Bewegungsmechanismus anzutreiben. Der Bewegungsmechanismus weist beispielsweise eine Kippvorrichtung auf, mit der die Befestigungsplattform gegenüber der Grundplattform beispielsweise in einem Bereich von 0° bis 45° zur Grundplattform geneigt werden kann. In einer Ausführungsform weist der Bauroboter eine Kombination der oben genannten Anpassungsvorrichtungen mit einem oder mehreren Aktuatoren zur selektiven Beaufschlagung davon auf. Mit dem wenigstens einen Aktuator wird somit die Befestigungsplattform, ggf. die Befestigungsschnittstelle und/ oder das Werkzeug relativ zur Basis bewegt, geneigt und/ oder gedreht.

In einer Ausgestaltung weist der Bauroboter eine Markierung auf. Die Markierung kann aktiv oder passiv ausgebildet sein und als Identifikationselement geeignet sein. Eine aktive Markierung sieht vor, dass die Markierung selbst zum Mitteilen einer Identifikation ausgebildet ist, d.h. dass sie einen Sender aufweist. Dazu kann die Markierung dauerhaft bzw. in regelmäßigen Abständen zum aktiven Senden ausgebildet sein. In einer Ausgestaltung kann die Markierung auch zum aktiven Senden auf eine empfangene Anfrage ausgebildet sein. Der Sender kann zur Aussendung selbst mit Energie, beispielsweise durch die Energieversorgung des Bauroboters versorgt werden. In einer Ausgestaltung kann der Sender auch die Energie, welche durch und/ oder mit dem anfragenden Signal bereitgestellt wird, zum Antworten bzw. zum Senden verwenden. Die Antwort oder die Mitteilung kann eine Identifikation des Bauroboters umfassen. Weiterhin werden bevorzugt Informationen zur ausführenden Aufgabe des Bauroboters sowie zur Position und Lage des Bauroboters selbst und/ oder bevorzugt des verwendeten Werkzeugs gesendet.

Bei einer passiven Markierung handelt es sich in der Regel lediglich um eine statische Information des Bauroboters, wie z. B. Identifikation. Die passive Markierung ist bestimmt sich in einer Ausgestaltung durch ein bestimmtes Erscheinungsbild. Daraus bestimmt ein Signalgeber, welcher separat zum Bauroboter angeordnet ist, aus der Auswertung der Wiedergabe der passiven Markierung die Position, Lage und/ oder Identifikation des Bauroboters und/ oder eines Bauteils des Bauroboters, beispielsweise Basis, der Funktionsplattform und/ oder des Werkezeug. Eine solche passive Markierung kann ein QR-Code, AprilTag, ein 3D-Code, ein Hologramm und/ oder ein Reflektorelement, beispielsweise ein Prisma, sein. Der Sender kann ein Lichtsignal zur passiven Markierung aussenden und aus dem reflektierten Licht eine entsprechende Information auslesen. Somit kann die passive Markierung ausgebildet sein, ein anfragendes Signal von einem separaten Gerät zu verändern bzw. bestimmt zu reflektieren, so dass dies als Antwort und somit das Abgeben einer Mitteilung von einem Empfänger verstanden wird. In einer Ausgestaltung kann die passive Markierung als RFID-Modul zur modulierten Rückstreuung ausgebildet sein.

Das Prisma als passive Markierung ist insbesondere zur Kommunikation mit einer Totalstation ausgebildet. Die Totalstation sendet ein Lichtsignal aus, das von dem Prisma reflektiert wird. Die Totalstation erkennt das reflektierte Licht und ermittelt daraus die Position des Bauroboters. Dazu kann das Prisma an der Basis angeordnet sein. In einer bevorzugten Ausgestaltung ist das Prisma an der Funktionsplattform, insbesondere in der Nähe des Werkzeugs, angeordnet. Somit kann genau überprüft werden, wo das Werkzeug sich befindet. Das Prisma ist vorteilhaft so angeordnet, dass möglichst wenige Bauteile des Bauroboters als auch in der Umgebung des Bauroboters ein Erfassen des Prismas durch die Totalstation stören. Die Totalstation kann mit dem Bauroboter in Kommunikation stehen, um den Bauroboter die erfassten Informationen insbesondere bezüglich seiner Position zu übermitteln.

In einer Ausgestaltung weist der Bauroboter einen Sensor auf. Insbesondere kann der Bauroboter einen Nivelliersensor, einen Neigungssensor, einen Positionssensor und/ oder einen optischen Sensor, wie einen Bildsensor, umfassen. Ein Nivelliersensor kann eingesetzt werden, eine Schräglage des Bauroboters, insbesondere der Funktionsplattform und/ oder des Werkzeugs, zu erfassen. Weiterhin kann der Nivelliersensor zur Erfassung einer Positionsabweichung eingesetzt werden. Eine solche Abweichung beeinflusst grundsätzlich das sichere und optimale Erreichen der Arbeitsposition durch das Werkzeug und/ oder die bestimmungsgemäße Ausführung einer Bauarbeit und führt zu einer Soll-Abweichung von einer Soll-Situation. Mithilfe der erfassten Abweichung kann diese Beeinflussung ermittelt werden, beispielsweise eine schräge Ausrichtung eines Bohrers, und entsprechend die aktiven Bewegungsfreiheitsgrade in Abhängigkeit der Abweichung angesteuert werden, um die Abweichung auszugleichen. Beispielsweise kann über die aktiven Bewegungsfreiheitsgrade die Funktionsplattform und insbesondere das Werkzeug so in ihrer Lage und Position gegenüber der Basis verändert werden, dass die erfasste Schräglage ausgeglichen wird und die Soll-Situation einer Ist-Situation entspricht. Am Beispiel der o.g. Ausrichtung des Bohrers kann der Bohrer in die Richtung ausgerichtet sein, in der sich das damit zu erzeugende Bohrloch erstrecken soll.

In einer Ausgestaltung ist der Nivelliersensor zur Erfassung eines Laserstrahls von einem Nivelliergerät ausgebildet. Solange der Laserstrahl an einer bestimmten Position erfasst wird, ist keine Anpassung von Funktionsplattform und/ oder Werkzeug notwendig. Eine Abweichung von der bestimmten Position wird validiert, z. B. von einer Steuerung. Die Steuerung passt ggf. die Lage und/ oder Position der Funktionsplattform und/ oder Werkzeug durch Ansteuern von aktivem Gelenk an, sodass der Laserstrahl wieder an seiner Soll-Position erfasst wird. Der Nivelliersensor kann zur Erfassung einer Laserlinie und/ oder eines Laserpunkts ausgebildet sein.

Mithilfe eines Neigungssensors kann eine Schräglage des Bauroboters selbst und/ oder eine Schräglage der Funktionsplattform, eines Werkzeugs, einer Befestigungsschnittstelle oder eines Endeffektors, an dem das Werkzeug angeordnet ist, erkennen. Der Neigungssensor kann eine oder mehrere Sensoreinheiten umfassen, um beispielsweise aus einem Referenzwert eine Neigung zu erfassen. Vorzugsweise ist zumindest eine Sensoreinheit oder der Neigungssensor selbst in der Nähe des Werkzeugs und/ oder der Funktionsplattform angeordnet. Im Besonderen wird vorzugsweise eine Neigung der Funktionsplattform und/ oder des Werkzeugs relativ zur Basis ermittelt, um einen Versatz von einer Soll-Position, welche sich für das Werkzeug aus der Position der Basis ergibt, zu einer realen Ist-Position zu ermitteln. Mit dem Neigungssensor kann damit das Werkzeug genau an der Arbeitsposition positioniert werden.

Mithilfe eines Bildsensors kann das Umfeld des Bauroboters untersucht werden. Der Bildsensor kann die räumliche Umgebung erfassen. Dabei kann der Bauroboter Hindernisse erkennen und durch entsprechende Anweisung durch die Steuerung Ausweichmanöver fahren und/ oder die Funktionsplattform als Alternative anders positionieren oder deren Lage ändern, um die Arbeitsposition zu erreichen und um das Hindernis somit zu umgehen.

In einer Ausgestaltung weist der Bauroboter einen Beschleunigungssensor auf. Der Beschleunigungssensor ist vorzugsweise an der Funktionsplattform und/ oder an dem Werkzeug angeordnet. Der Bauroboter ermittelt mit dem Beschleunigungssensor mithilfe der Gravität und/ oder instantane Beschleunigung eine Orientierung und Position des Werkzeugs und/ oder der Funktionsplattform.

In einer Ausgestaltung weist der Bauroboter eine Steuerung auf. Die Steuerung steuert wenigstens einen Aktuator zur Beaufschlagung des wenigstens einen aktiven Bewegungsfreiheitsgrads. Die Steuerung kann eine Recheneinheit, beispielsweise eine CPU, und einen Speicher umfassen. Weiterhin kann die Steuerung mit einer entfernten Recheneinheit in Kommunikation stehen, beispielsweise mittels WLAN, Bluetooth und/ oder über Mobilfunknetzwerk.

In einer Ausführung weist der Bauroboter eine Hubvorrichtung auf. Die Hubvorrichtung verbindet die Funktionsplattform mit der Basis. Weiterhin ist die Hubvorrichtung zum Vergrößern und/ oder Verkleinern der Distanz zwischen Basis und Funktionsplattform ausgebildet. In einer Variante weist die Hubvorrichtung ein aktives prismatisches Gelenk auf, beispielsweise eine mittels Aktuator beaufschlagte Druckluftfeder. Somit lässt sich die Verbindungsstrecke zwischen Funktionsplattform und Basis aktiv verändern.

In einer Ausgestaltung ist die Hubvorrichtung ausgebildet, eine Kraft von der Basis entgegen der Funktionsplattform in Längserstreckung der Hubvorrichtung auszuüben. Dies kann eine positive Kraft, womit die Funktionsplattform von der Basis weggedrückt wird und/ oder eine negative Kraft, womit die Funktionsplattform zur Basis gezogen wird, sein.

In einer Ausgestaltung umfasst der Bauroboter dabei die erste, die zweite und die dritte Verbindungsstrebe aus einem flexiblen, langgestreckten Material, beispielsweise Draht und/ oder Seil. Die Hubvorrichtung ist schwenkbar zu der Basis innerhalb des durch das erste, zweite und dritte Basisgelenk aufgespannte erste Dreieck angeordnet und erstreckt sich von der Basis im Wesentlichen von der Bodenfläche weg. Weiterhin ist die Hubvorrichtung schwenkbar zur Funktionsplattform innerhalb des durch das erste, zweite und dritte Funktionsplattformgelenk an der Funktionsplattform angeordnet.

In einer Ausführungsform der weist der Bauroboter wenigstens eine Wickelvorrichtung. Die Wickelvorrichtung ist ausgebildet, die Länge der Längserstreckung der ersten, zweiten und/ oder dritten verbindungsstrebe zu verändern.

Durch eine solche Konstruktion lässt sich ein besonders leichter Bauroboter realisieren, der alle Anforderungen für die Verrichtung von Bauarbeiten erfüllt und gleichzeitig Arbeiten in großer Höhe ausführen kann.

Grundsätzlich ist es möglich, die Ausgestaltung des ersten Basisgelenks mit dem ersten Funktionsplattformgelenk auszutauschen, die Ausgestaltung des zweiten Basisgelenks mit dem zweiten Funktionsplattformgelenk auszutauschen und/ oder die Ausgestaltung des dritten Basisgelenks mit dem dritten Funktionsplattformgelenk auszutauschen. Somit ist es grundsätzlich möglich, wie oben beschrieben beispielsweise das erste Basisgelenk als sphärisches Gelenk auszuführen und das erste Funktionsplattformgelen als Schwenkgelenk auszuführen. Alternativ dazu kann entsprechend beispielsweise das erste Basisgelenk als Schwenkgelenk ausgeführt werden, wobei gleichzeitig dann das erste Funktionsplattformgelenk als sphärisches Gelenk auszuführen wäre. Analoges gilt dann für das zweite und dritte Basisgelenk bzw. zweite und dritte Funktionsplattformgelenk. Bei beide Versionen einer Konfiguration der ersten, zweiten und/ oder dritten Verbindungsstrebe wäre jeweils eine kinematische Kette vo fünf Bewegungsfreiheitsgraden gegeben.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Kurze Beschreibung der Figuren

In den Figuren zeigen:
- Fig. 1: eine erste schematische Darstellung einer Ausführungsform eines Bauroboters gemäß Erfindung;
- Fig. 2: ein erstes Ausführungsbeispiel kinematischer Ketten für Verbindungsstreben für einen Bauroboter basierend Fig. 1;
- Fig. 3: eine weiteres schematisches Ausführungsbeispiel kinematischer Ketten kinematischer Ketten für Verbindungsstreben für einen Bauroboter;
- Fig. 4: ein weiteres schematisches Ausführungsbeispiel kinematischer Ketten für Verbindungsstreben für einen Bauroboter;
- Fig. 5: ein weiteres schematisches Ausführungsbeispiel eines zusammenklappbaren Bauroboters basieren Fig. 2;
- Fig. 6: ein weiteres schematisches Ausführungsbeispiel kinematischer Ketten für Verbindungsstreben für einen Bauroboter;
- Fig. 7: eine dreidimensionale Darstellung eines Bauroboters gemäß der Erfindung; und
- Fig. 8: eine schematische Darstellung einer weiteren Ausführungsform eines Bauroboters gemäß der Erfindung.

### Ausführliche Beschreibung der Figuren

In der nachfolgenden Beschreibung der Figuren werden zur Erleichterung des Verständnisses für gleiche oder sich funktional entsprechende Elemente über die verschiedenen Figuren hinweg jeweils die gleichen Bezugszeichen verwendet.

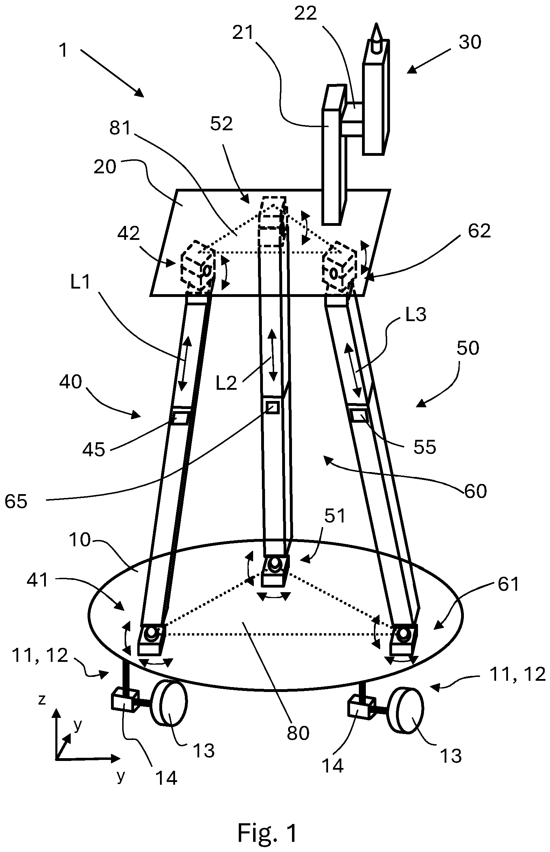

In der Fig. 1 ist ein Ausführungsbeispiel eines Bauroboters 1 dargestellt. Der Bauroboter 1 weist eine Basis 10 auf. An einer Seite der Basis 10, welche einem Boden zugewandt ist, ist eine Fahreinheit 11 angeordnet. Die Fahreinheit 11 umfasst im vorliegenden Ausführungsbeispiel ein Fahrwerk 12mit drei Reifen 13. Jedes Fahrwerk 12 umfasst eine Antriebseinheit 14. Die Antriebseinheit 14 weist einen Elektromotor. Der Elektromotor ist jeweils mit einem Reifen 13 gekoppelt, um diesen anzutreiben. In der Ausgestaltung von drei individuell angetriebenen Reifen 13 kann der Bauroboter 1 durch separate Ansteuerung sowohl zur Vorwärtsfahrt als auch zur Rückwärtsfahrt und dem Fahren von Kurven angesteuert werden, ohne dass eine separate Lenkeinrichtung erforderlich ist. Alternativ oder zusätzlich kann wenigstens ein Fahrwerk 12, vorzugsweise jedes Fahrwerk 12 mit einer drehbaren Aufhängung ausgebildet sein, um den entsprechenden Reifen 13 hinsichtlich der Bewegungsrichtung zu drehen und dem Bauroboter 12 eine Veränderung der Bewegungsrichtung zu ermöglichen.

Auf der dem Boden gegenüberliegenden Seite der Basis 10 sind eine erste, eine zweite und eine dritte Verbindungsstrebe 40, 50, 60 jeweils mittels eines Basisgelenks 41, 51, 61 verschwenkbar angeordnet. Dabei sind das erste, zweite und dritte Basisgelenk 41, 51, 61 als sphärisches Gelenk, d.h. als Gelenk mit drei Freiheitsgraden, ausgebildet. Jede der Verbindungsstreben 40, 50, 60 ist im vorliegenden Beispiel stangenförmig ausgebildet, d.h. sie sind länglich und erstrecken sich jeweils ein eine erste, zweite und dritte Längsrichtung L1, L2, L3. Das erste Basisgelenk 41 ist an einem ersten Ende der ersten Verbindungsstrebe 40 in erster Längsrichtung L1 angeordnet, das zweite Basisgelenk 51 ist an einem ersten Ende der zweiten Verbindungsstrebe 51 in zweiter Längsrichtung L2 angeordnet und das dritte Basisgelenk 61 ist an einem ersten Ende der dritten Verbindungsstrebe 61 in dritter Längsrichtung L3 angeordnet.

An einem dem ersten Ende der ersten Verbindungsstrebe 40 in erster Längsrichtung L1 gegenüberliegenden zweiten Ende ist ein erstes Funktionsplattformgelenk 42 angeordnet. An einem dem ersten Ende der zweiten Verbindungsstrebe 50 in zweiter Längsrichtung L2 gegenüberliegenden zweiten Ende ist ein zweites Funktionsplattformgelenk 52 angeordnet. An einem dem ersten Ende der dritten Verbindungsstrebe 60 in dritter Längsrichtung L3 gegenüberliegenden zweiten Ende ist ein drittes Funktionsplattformgelenk 62 angeordnet. Das erste, zweite und dritte Funktionsplattformgelenk 42, 52, 62 sind als Scharniergelenk ausgeführt, d.h. als sogenannte Revolute Joints, und weisen einen Freiheitsgrad auf.

Das erste, zweite und dritte Funktionsplattformgelenk 42, 52, 62 sind jeweils an einer Seite einer Unterseite einer Funktionsplattform 20 angeordnet. Weiterhin ist an der Funktionsplattform 20 eine Befestigungsschnittstelle 21 angeordnet. Die Befestigungsschnittstelle 21 ist im vorliegenden Ausführungsbeispiel an der der Unterseite gegenüberliegenden Seite der Funktionsplattform 20 angeordnet. Die Befestigungsschnittstelle 21 weist eine Schnittstelle 22 zur Befestigung eines Werkzeugs 30, vorliegend eine Schlagbohrmaschine, auf.

Das erste, zweite und dritte Basisgelenk 41, 51, 61 spannen ein erstes Dreieck 80 auf. Weiterhin spannen das erste, zweite und dritte Funktionsplattformgelenk 42, 52, 62 ein zweites Dreieck 81 auf.

Die erste Verbindungsstrebe 40 umfasst ein erstes prismatisches Gelenk 43, die zweite Verbindungsstrebe 50 umfasst ein zweites prismatisches Gelenk 53 und die dritte Verbindungsstrebe 60 umfasst ein drittes prismatisches Gelenk 63. Mithilfe den prismatischen Gelenken 43, 53, 63 sind die Verbindungsstreben 40, 50, 60 ausgebildet, in ihre Längsrichtung L1, L2 und L3 variabel zu sein. Vorliegend sind die prismatische Gelenke 43, 53, 63 der Verbindungsstreben 40, 50 und 60 jeweils Teleskopgelenke mit einem Freiheitsgrad. Die Verbindungsstreben 40, 50, 60 sind in diesem Ausführungsbeispiel jeweils zweiteilig ausgeführt, welche über das prismatische Gelenk 43, 53, 63 zueinander translatorisch in der jeweiligen Längsrichtung L1, L2, L3 verschiebbar sind. Somit kann die Länge der ersten, zweiten und dritten Verbindungsstreben 40, 50, 60 verändert werden.

Jede der Verbindungsstreben 40, 50, 60 weist einen angetriebenen linearen Aktuator, nämlich die prismatischen Gelenke 43, 53, 63. Dazu weist das erste prismatische Gelenk 43 einen ersten Teleskopantrieb 45, das zweite prismatische Gelenk 53 einen zweiten Teleskopantrieb 55 und das dritte prismatische Gelenk 63 einen dritten Teleskopantrieb 65 auf. Die kinematischen Ketten gebildet an der ersten Verbindungsstrebe 40 mittels erstem Funktionsplattformgelenk 42, erstem Teleskopantrieb 45 und erstem Basisgelenk 41, an der zweiten Verbindungsstrebe 50 mittels zweitem Funktionsplattformgelenk 52, zweitem Teleskopantrieb 55 und zweitem Basisgelenk 51 sowie an der dritten Verbindungsstrebe 60 mittels drittem Funktionsplattformgelenk 62, drittem Teleskopantrieb 65 und drittem Basisgelenk 61 weisen demnach jeweils 5 Freiheitsgrade auf. Das erste, zweite und dritte Funktionsplattformgelenke 42, 52, 62 als "Revolute Joint" sind jeweils derart positioniert und ausgerichtet, dass ihre Gelenkachse parallel zum aufgespannten zweiten Dreieck 81 verläuft. Vorzugsweise sind die erste, zweite und dritte Funktionsplattformgelenke 42, 52, 62 ausgerichtet, dass jeweils eine Normale zu ihrer Gelenkachse fluchtend zur Schwenkbewegung der jeweiligen Verbindungsstrebe 40, 50, 60 den Flächenschwerpunkt des zweiten Dreiecks 81 schneiden.

Wie dem Ausführungsbeispiel der Fig. 1 zu entnehmen ist, bildet jede der drei Verbindungsstreben 40, 50, 60 eine kinematische Kette. Vorzugsweise spannen die drei Basisgelenke 41, 51, 61 das erste Dreieck 80 als auch die die Funktionsplattformgelenke 42, 52, 62 das zweite Dreieck 81 auf und bilden jeweils ein gleichseitiges, wenigstens aber ein gleichschenkliges Dreieck auf. Es ist aber auch jeweils eine beliebig andere Dreiecksform für das erste und/ oder zweite Dreieck 80, 81 denkbar. Dabei hat insbesondere ein gleichseitiges Dreieck für das erste und/ oder zweite Dreieck 80, 81 den Vorteil, dass bei Verstellung der drei Verbindungsstreben 40, 50, 60 in ihrer Längserstreckung die Lage des ersten Dreiecks 80 zum zweiten Dreieck 81 im üblichen Arbeitsbereich in einem Toleranzbereich von maximal 20° zueinander verbleibt, insbesondere maximal 10°. Vorzugsweise sind das erste und zweite Dreieck 80, 81 bei gleicher Längserstreckung der ersten, zweiten und dritten Verbindungsstrebe 40, 50, 60 parallel zueinander ausgerichtet.

Werden der erste, zweite und dritte Teleskopantrieb 45, 55, 65 gleich zum Verlängern beaufschlagt, d.h. das erste, zweite und dritte prismatische Gelenk 45, 55, 65 werden entsprechend angetrieben, so wird die Distanz zwischen der Funktionsplattform 20 und der Basis 10 größer. Gleichzeitig wird ein Winkel jeweils zwischen der ersten, zweiten und dritten Verbindungsstrebe 40, 50, 60 zur Basis 10 größer. Weiterhin vergrößert sich auch ein Winkel zwischen der ersten, zweiten und dritten Verbindungsstrebe 40, 50, 60 zur Funktionsplattform 20. Vorliegend sind die Funktionsgelenke 42, 52, 62 so ausgerichtet, dass die Schwenkrichtung der Verbindungsstreben 42, 52, 62 zum Flächenschwerpunkt des zweiten Dreiecks 81 gerichtet ist. Die gleichzeitige Längenänderung in erster, zweiter und dritter Längsrichtung L1, L2 und L2 der ersten, zweiten und dritten Verbindungsstrebe 40, 50, 60 bewirkt damit nicht nur eine Höhenveränderung der Funktionsplattform 20, sondern auch, dass die Ausrichtung der Funktionsplattform 20 relativ zur Basis 10 während der Höhenveränderung gleichbleibt.

Verändert sich nur eine der ersten, zweiten oder dritten Verbindungsstrebe 40, 50, 60 ihre Längserstreckung in ihre Längsrichtung L1, L2, L3, so verändert sich auch die Position des zweiten Dreiecks 81 bezüglich des ersten Dreiecks 80. D.h. eine Normale zum zweiten Dreieck schneidet das erste Dreieck an einem anderen Punkt. Es findet demnach eine Verschiebung statt. Beispielsweise eine Verlängerung der Längserstreckung der ersten Verbindungsstrebe 40 mithilfe des ersten Teleskopantriebs 45, während die zweite und dritte Verbindungsstrebe 50, 60 in ihrer Längserstreckung unverändert verbleibt, bewirkt eine Verschiebung der Funktionsplattform 20 im Wesentlichen in eine x-y-Richtung, vorwiegend positiv in x- und positiv in y-Richtung.

Ein Winkel aufgespannt zwischen erster Verbindungsstrebe 40 und Basis 10 verkleinert sich. Ein Winkel aufgespannt zwischen zweiter Verbindungsstrebe 50 und Basis 10 sowie zwischen dritter Verbindungsstrebe 60 und Basis 10 vergrößert sich. Bis zu einem Winkel zwischen zweiter Verbindungsstrebe 50 und Basis 10 sowie dritter Verbindungsstrebe 60 und Basis 10 von 90° ist aufgrund der kinematischen Kette der zweiten und dritten Verbindungsstrebe 50, 60 ist keine signifikante Lageänderung der Funktionsplattform 20 zur Basis 10 zu erkennen. Eine signifikante Lageänderung wäre beispielswiese ein Kippwinkel ab 20°, vorzugsweise mehr als 10°, zwischen Basis 10 und Funktionsplattform 20. Wird die Längserstreckung der ersten Verbindungsstrebe 40 weiter vergrößert und der Winkel zwischen zweiter Verbindungsstrebe 50 und Basis 10 und/ oder dritter Verbindungsstrebe 60 und Basis überschreitet 90°, insbesondere 110°, so ist erst ein stetig ansteigender Kippwinkel erkennbar. Zum Ausgleich können die zweite und/ oder dritte Verbindungsstrebe 50, 60 ihre Länge in jeweiliger zweiter bzw. dritter Längserstreckung L2, L3 anpassen, d.h. vorliegend vergrößern, damit der Kippwinkel zwischen erstem Dreieck 80 und zweiten Dreieck 81 maximal 20° beträgt.

Wird die Längserstreckung der ersten Verbindungsstrebe 40 in erster Längsrichtung L1 verringert, verschiebt sich die Position der Funktionsplattform 20 relativ zur Basis negativ in x- und y-Richtung. In analoger Weise zum Absatz vergrößert sich Winkel zwischen erstem Dreieck 80 und erster Verbindungsstrebe 40. Gleichzeitig verkleinert sich ein Winkel zwischen dem ersten Dreieck 80 und der zweiten Verbindungsstrebe 50 und zwischen dem ersten Dreieck 80 und dritter Verbindungsstrebe 60.

Die vorangehende Beschreibung zur Bewegung der der ersten Verbindungsstrebe 40 während einer Veränderung ihrer Längserstreckung in erster Längsrichtung L1 gelten analog für die zweite und dritte Verbindungsstrebe 50, 60.

Anstelle der Veränderung der Länge nur einer der ersten, zweiten oder dritten Verbindungsstrebe 40, 50, 60 können auch zwei oder drei der drei Verbindungsstreben 40, 50, 60 individuell in ihrer Länge variiert werden. Entsprechend werden der erste, zweite und/ oder dritte Teleskopantrieb 45, 55, 65 spezifisch angetrieben. Die Funktionsplattform 20 kann somit in jegliche x-y-Richtung bewegt werden. Weiterhin ist der Abstand zwischen Basis 10 und Funktionsplattform 20, d. h. die Höhe der Basis 10, einstellbar. Das Werkzeug 30 kann mithilfe der Justage der ersten, zweiten und dritten Verbindungsstrebe 40, 50, 60 genau in Lage und Höhe positioniert werden.

Mit der Vorrichtung gemäß dem Ausführungsbeispiel der Fig. 1 kann der Bauroboter 1 grob an einer Arbeitsposition positioniert werden. Eine Feineinstellung und insbesondere das Anfahren eine Arbeitsposition in einer Arbeitshöhe über einer Bodenfläche, kann mithilfe der Längenvariabilität der ersten, zweiten und/ oder dritten Verbindungsstrebe 40, 50, 60 erreicht werden.

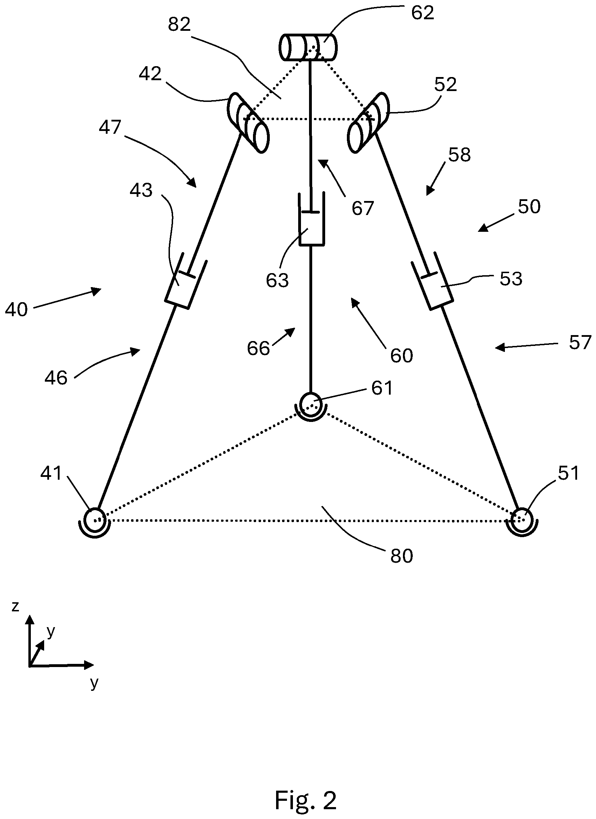

In der Fig. 2 ist eine schematische Ansicht der kinematischen Ketten zum Ausführungsbeispiel gemäß Fig. 1 dargestellt. Zur Vereinfachung sind lediglich die erste, zweite und dritte Verbindungsstrebe 40, 50, 60 mit ihren Gelenken dargestellt.

Die erste, zweite und / oder dritten Verbindungsstrebe 40, 50, 60 sind stabförmig ausgebildet, d.h. sie sind länglich ausgebildet. Die erste, zweite und/ oder dritte Verbindungsstrebe 40, 50, 60 können in ihrer Längserstreckung eine profilierte Querschnittsfläche aufweisen, beispielsweise mit einer Ausnehmung und in Längserstreckung rohrförmig mit runder oder viereckiger Außenquerschnittsfläche ausgebildet sein. Weiterhin kann die profilierte Querschnittsfläche als Vollmaterial ausgebildet sein, und beispielsweise T-, U oder Doppel-T-förmig ausgebildet sein. Bei dem Material der ersten, zweiten und/ oder dritten Verbindungsstrebe 40, 50, 60 kann es sich um ein Vollmaterial, geschäumten Material, Gewirke, Gestricke und/ oder Geflecht, beispielsweise ein Seil oder Draht, handeln. Die erste, zweite und/ oder dritte Verbindungsstrebe 40, 50, 60 kann starr, elastisch oder flexibel ausgebildet sein.

Die erste Verbindungsstrebe 40 weist an einem ersten Ende, welches der Basis 10 (s. Fig. 1) zugewandt ist, ein erstes Basisgelenk 41 auf. Das erste Basisgelenk 41 weist drei Bewegungsfreiheitsgrade auf und ist vorliegend als sphärisches Gelenk ausgebildet. Weiterhin weist die erste Verbindungsstrebe 40 an dem zweiten Ende, welches dem ersten Ende gegenüber liegt, ein erstes Funktionsplattformgelenk 42 auf. Das erste Funktionsplattformgelenk 42 weist einen Bewegungsfreiheitsgrad (revolute joint) auf und ist als Scharnier ausgebildet.

Die erste Verbindungsstrebe 40 ist in ihrer Längserstreckung variabel ausgeführt. Dazu weist die erste Verbindungsstrebe 40 einen ersten und einen zweiten Abschnitt 46, 47 auf, wobei der erste und zweite Abschnitt über ein erstes prismatisches Gelenk 43 longitudinal zueinander verschiebbar angeordnet sind. Der zweite Abschnitt 47 befindet sich näher am Funktionsplattformgelenk 42. Vorliegend ist das prismatische Gelenk 43 als Teleskopgelenk ausgeführt, so dass der zweite Abschnitt 47 sich in den ersten Abschnitt 46 partiell in Längserstreckung der ersten Verbindungsstrebe 40 hineinverschieben lässt und so die Länge der ersten Verbindungsstrebe 40 verringert. Weiterhin können sich der erste Abschnitt 46 und zweite Abschnitt 47 translatorisch zueinander verschieben und so auch ausziehen, und damit die Länge der ersten Verbindungsstrebe 40 vergrößern.

In analoger Weise weisen die zweiten und dritten Verbindungsstreben 50, 60 ein zweites bzw. drittes prismatisches Gelenk 53, 63, sowie jeweils einen ersten Abschnitt 56, 66 und einen zweiten Abschnitt 57, 67 auf.

Die zweite Verbindungsstrebe 50 weist an einem ersten Ende, welches der Basis 10 (s. Fig. 1) zugewandt ist, ein zweites Basisgelenk 51 auf. Das zweite Basisgelenk 51 weist drei Bewegungsfreiheitsgrade auf und ist vorliegend als sphärisches Gelenk ausgebildet. Weiterhin weist die zweite Verbindungsstrebe 50 an dem zweiten Ende, welches dem ersten Ende gegenüber liegt, ein zweites Funktionsplattformgelenk 52 auf. Das zweite Funktionsplattformgelenk 52 weist einen Bewegungsfreiheitsgrad (revolute joint) auf und ist als Scharnier ausgebildet.

Die dritte Verbindungsstrebe 60 weist an einem ersten Ende, welches der Basis 10 (s. Fig. 1) zugewandt ist, ein drittes Basisgelenk 61 auf. Das dritte Basisgelenk 61 weist drei Bewegungsfreiheitsgrade auf und ist vorliegend als sphärisches Gelenk ausgebildet. Weiterhin weist die dritte Verbindungsstrebe 60 an dem zweiten Ende, welches dem ersten Ende gegenüber liegt, ein drittes Funktionsplattformgelenk 62 auf. Das dritte Funktionsplattformgelenk 62 weist einen Bewegungsfreiheitsgrad (revolute joint) auf und ist als Scharnier ausgebildet.

Die erste, zweit und dritte Verbindungsstrebe 40, 50, 60 weist damit 5 Bewegungsfreiheitsgrade auf.

Das erste, zweite und dritte Basisgelenk 41, 51, 61 spannen miteinander ein erstes Dreieck 80 auf. Das erste, zweite und dritte Funktionsplattformgelenk 42, 52, 62 spannen miteinander ein zweites Dreieck 81 auf.

Angenommen die erste Ebene des ersten Dreiecks 80 liegt in einer x-y-Ebene, welche durch die x-Achse und y-Achse aufgespannt wird. Die x-Achse verläuft senkrecht zur y-Achse. Weiterhin verläuft eine z-Achse senkrecht zur x-y-Ebene und beschreibt eine Höhenrichtung von einer Bodenfläche weg. Die x-, y- und z-Achse sind jeweils senkrecht zueinander. Eine Veränderung jedes der Gelenke, d.h. der ersten, zweiten und/ oder dritten Basisgelenke 41, 51, 61, der ersten, zweiten und/ oder der Länge der ersten, zweiten und/ oder dritten Funktionsplattformgelenke 42, 52, 62 und/ oder der ersten zweiten und/ oder dritten prismatischen Gelenke 43, 53, 63 bewirkt eine Veränderung in der Position, d.h. x-, y- und z-Ausrichtung, und der Lage, d.h. die Neigung, des zweiten Dreiecks 81 relativ zum ersten Dreieck.

Wie aus der Darstellung der Fig. 2 ersichtlich, kann durch Beaufschlagung nur eines Gelenks der ersten, zweiten und dritten Verbindungsstrebe 40, 50, 60, die Position und Lage des ersten Dreiecks 80 relativ zum zweiten Dreieck 81 verändert werden. Aufgrund der kinematischen Kopplung zwischen der ersten, zweiten und dritten Verbindungsstrebe 40, 50, 60 beeinflusst eine Veränderung einer der drei Verbindungsstreben 40, 50, 60 die anderen beiden. Aufgrund der kinematischen Kopplung ist jedoch bis zu einem Längenunterschied einer der Verbindungsstreben 40, 50, 60 relativ zu den anderen sowie in Abhängigkeit des unterschieds zwischen erstem und zweiten Dreieck 80, 81 kann die Position des zweiten Dreiecks 81 von einer Nullposition derart weit in x-y-Richtung verschoben werden, ohne dass eine signifikante Lageänderung aus der Nullposition, d.h. ein Kippwinkel von mehr als 20° des zweiten Dreiecks 81 zum ersten Dreieck 80, vorhanden wäre. Dabei bestimmt sich die Nullposition in x-y-Richtung derart, dass eine Normale durch den Flächenschwerpunkt des zweiten Dreiecks 81 senkrecht durch den Flächenschwerpunkt des ersten Dreiecks 80 verläuft.

Mit dem vorliegenden Bauroboter kann somit zum einen erreicht werden, dass mit einfacher Steuerung die Distanz zwischen erstem und zweiten Dreieck 80, 81 verändert werden kann. Somit kann ein Endeffektor und/ oder eine Werkzeugmaschine in ihrer Arbeitshöhe verändert werden, um diese an eine gewünschte Arbeitsposition anzuheben oder abzusenken. Mithilfe der Positionsveränderung in x-y-Richtung kann der Arbeitsbereich in x-y-Richtung angepasst und deutlich vergrößert werden. Ein entsprechender Bauroboter kann unter Umständen mehrere Arbeitspositionen von einer Bauroboterposition anfahren und mit dem Werkzeug bearbeiten.

Bei Implementierung an einem Bauroboter wie in Fig. 1 ist eine deutlich gesteigerte Arbeitsgeschwindigkeit mittels verbesserten Anfahrens von einer Arbeitsposition erkennbar in zwei Schritten erzielt. In einem ersten Schritt fährt der Bauroboter einen Arbeitspositionsbereichs an. Der Arbeitspositionsbereich umfasst wenigstens eine Arbeitsposition, vorzugsweise eine Vielzahl an Arbeitspositionen, welche im Wirkbereich des Bauroboters, insbesondere aufgrund des vergrößerten Wirkbereichs mit der neuen Bewegung des Werkzeugs, liegen. In einem zweiten Schritt wird die wenigstens eine Arbeitsposition durch Beaufschlagen der kinematischen Ketten mit dem Werkzeug angefahren und bearbeitet. Insbesondere bei mehrere Arbeitspositionen in einem Arbeitsbereich des Bauroboters können diese Arbeitspositionen mit dem Werkzeug angefahren werden, ohne dass zwischendurch der Bauroboter bewegt werden muss.

Weiterhin kann die Lage der zweiten Dreiecks 81 und somit der Ausrichtung des Werkzeugs einem Neigungseffekt, hervorgerufen durch ein Anheben des Werkzeugs bzw. der vergrößerten Distanz zwischen erstem und zweiten Dreieck 80, 81 und Spiel der jeweiligen Bauteile des Bauroboters sowie durch Bodenrauigkeit und Bodenneigung ausgeglichen werden.

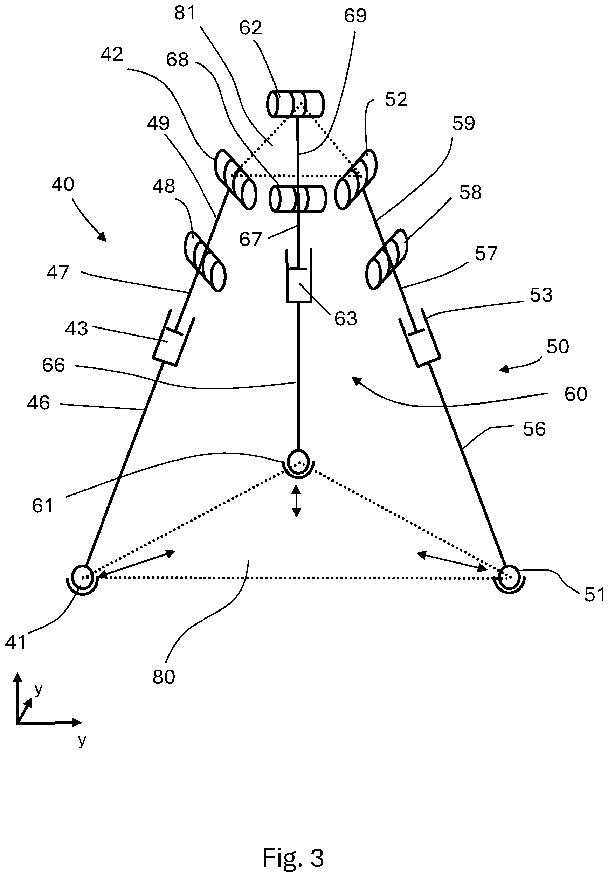

In der Fig. 3 ist ein weiteres Ausführungsbeispiel von kinematischen Ketten dargestellt. Nachfolgend wird lediglich auf die Unterschiede zu dem Ausführungsbeispiel aus Fig. 2 eingegangen.

Die erste, zweite und dritte Verbindungsstrebe 40, 50, 60 sind im Beispiel der Fig. 3 dreigliedrig ausgebildet.

Die erste Verbindungsstrebe 40 ist stabförmig ausgeführt und umfasst einen ersten, zweiten und dritten Abschnitt 46, 47, 49. Der erste Abschnitt 46 der ersten Verbindungsstrebe 40 weist an einem Ende das erste Basisgelenk 41, ausgebildet als Kugelgelenk, auf. Am vom ersten Basisgelenk 41 gegenüberliegenden Ende des ersten Abschnitts 46 ist das erste prismatische Gelenk 43 angeordnet. Das erste prismatische Gelenk 43 verbindet den ersten Abschnitt 46 mit einem Ende des zweiten Abschnitts 47. Der zweite Abschnitt 47 weist an dem Ende, welcher dem ersten prismatischen Gelenk 43 gegenüberliegt, ein erstes Zwischengelenk 48 auf. Das erste Zwischengelenk 48 verbindet das dem ersten prismatischen Gelenk 43 gegenüberliegenden Ende des zweiten Abschnitts 47 der ersten Verbindungsstrebe 40 mit einem Ende des dritten Abschnitts 49 der ersten Verbindungsstrebe 40. Ein Ende des zweiten Abschnitts 47, welches dem Zwischengelenk 48 gegenüber liegt, ist an das erste Funktionsplattformgelenk 42 gekoppelt. Das erste Funktionsplattformgelenk 42 verbindet den dritten Abschnitt 49 der ersten Verbindungsstrebe 40 mit der Funktionsplattform (s. Fig. 1). Das Zwischengelenk 48 ist in diesem Ausführungsbeispiel als Scharnier ausgebildet.

Die zweite Verbindungsstrebe 50 ist stabförmig ausgeführt und umfasst einen ersten, zweiten und dritten Abschnitt 56, 57, 59. Der erste Abschnitt 56 der zweiten Verbindungsstrebe 50 weist an einem Ende das zweite Basisgelenk 51, ausgebildet als Kugelgelenk, auf. Am vom zweiten Basisgelenk 51 gegenüberliegenden Ende des ersten Abschnitts 56 ist das zweite prismatische Gelenk 53 angeordnet. Das zweite prismatische Gelenk 53 verbindet den ersten Abschnitt 56 mit einem Ende des zweiten Abschnitts 57 der zweiten Verbindungsstrebe 50. Dieser zweite Abschnitt 57 weist an dem Ende, welcher dem zweiten prismatischen Gelenk 53 gegenüberliegt, ein zweites Zwischengelenk 58 auf. Das zweite Zwischengelenk 58 verbindet das dem zweiten prismatischen Gelenk 53 gegenüberliegenden Ende des zweiten Abschnitts 57 mit einem Ende des dritten Abschnitts 59. Ein dem prismatischen Gelenk 53 gegenüberliegendes Ende des zweiten Abschnitts 57 der zweiten Verbindungsstrebe 50 ist mit dem zweiten Funktionsplattformgelenk 52 verbunden. Das zweite Funktionsplattformgelenk 52 verbindet den dritten Abschnitt 59 der zweiten Verbindungsstrebe 50 mit der Funktionsplattform (s. Fig. 1). Das zweite Zwischengelenk 58 ist in diesem Ausführungsbeispiel als Scharnier ausgebildet.

Analog der Konfiguration ersten und zweiten Verbindungsstrebe 40, 50 ist die dritte Verbindungsstrebe 60 ausgebildet. Ein erster Abschnitt 66 der dritten Verbindungsstrebe 60 weist an einem Ende das dritte Basisgelenk 61 auf. Am dem dritten Basisgelenk 61 gegenüberliegenden Ende des ersten Abschnitts 66 der dritten Verbindungsstrebe 60 ist das dritte prismatische Gelenk 63 angeordnet. Das dritte prismatische Gelenk 63 verbindet den ersten Abschnitt 66 mit einem Ende des zweiten Abschnitts 67 der dritten Verbindungsstrebe 60. An den dem dritten prismatischen Gelenk 63 gegenüberliegenden Ende ist ein drittes Zwischengelenk 68 angeordnet. Das dritte Zwischengelenk 68 verbindet den zweiten Abschnitt 67 der dritten Verbindungsstrebe 60 mit einem Ende des dritten Abschnitts 69 der dritten Verbindungsstrebe 60. Das dem dritten Zwischengelenk 68 gegenüberliegenden Ende des dritten Abschnitts 69 ist mit dem Funktionsplattformgelenk 62 verbunden. Das Funktionsplattformgelenk 62 ist als Scharnier ausgebildet.

Das erste, zweite und dritte Zwischengelenk 48, 58, 68 ist als Scharnier, d. h. als sogenanntes revolute joint mit einem Bewegungsfreiheitsgrad, ausgeführt. Das erste Zwischengelenk 48 und das erste Funktionsplattformgelenk 42, das zweite Zwischengelenk 58 und das zweite Funktionsplattformgelenk 52 sowie das dritte Zwischengelenk 68 und das dritte Funktionsplattformgelenk 62 sind jeweils so angeordnet, dass die Zwischengelenke 48, 58, 68 nicht koaxial mit dem entsprechenden Funktionsplattformgelenk 42, 52, 62 sind.

Wie aus der Konfiguration gemäß Fig. 3 ersichtlich weist die erste, zweite und dritte Verbindungsstrebe 40, 50, 60 jeweils 6 Bewegungsfreiheitsgrade auf. Deshalb ist die kinematische Kette überbestimmt. Um insbesondere ein Einknicken der ersten, zweiten und dritten Verbindungsstrebe 40, 50, 60 zu verhindern ist beispielsweise jeweils entweder das Zwischengelenk 48, 58, 68 oder das Funktionsplattformgelenk 42, 52, 62 angetrieben oder verrastbar.

In einem Ausführungsbeispiel ist deshalb vorgesehen, dass die Zwischengelenke 48, 58, 68 mittels Antriebs angetrieben sind, wobei bei deaktiviertem Antrieb das jeweilige Zwischengelenk 48, 58, 68 in ihrer Bewegung blockiert sind. Vorzugsweise weist jedes der Zwischengelenke 48, 58, 68 einen eigenen Antrieb (nicht dargestellt), beispielsweise ein Motor, auf. Der wenigstens eine Antrieb kann mit einer Steuerung betätigt werden.

Die Zwischengelenke 48, 58, 68 ermöglichen gegenüber der Konfiguration aus Fig. 2 eine zusätzlich erweiterte Einstellung der Lage des durch die Funktionsplattformgelenke 42, 52, 62 aufgespanntem zweiten Dreiecks 81 zum durch die Basisgelenke 41, 51, 61 aufgespannten ersten Dreieck 80. Somit kann die Lage der Funktionsplattform 20 (s. Fig. 1) relativ zu einer Bodenfläche bzw. zu dem ersten Dreieck 80 eingestellt werden.

Optional oder zusätzlich kann, wie in Fig. 3 schematisch dargestellt, wenigstens ein, vorzugsweise die drei Basisgelenke 41, 51, 61 verschiebbar, dargestellt durch die Pfeile, angeordnet sein. Das bedeutet, dass die Position der Basisgelenke 41, 51, 61 zur Basis 10 (s. Fig. 1) verschiebbar ist. Zur Bewegung der Basisgelenke 41, 51, 61 sind beispielsweise Schienen oder Seilzüge an der Basis 10 angeordnet (nicht dargestellt). Die Basisgelenke 41, 51, 61 können manuell oder motorisch angetrieben verstellt werden. Das Verstellen der Position der Basisgelenke 41, 51, 61 bewirkt eine Änderung des aufgespannten ersten Dreiecks 80 aber auch eine Änderung der Position der ersten, zweiten und/ oder dritten Verbindungsstrebe 40, 50, 60. Weiterhin wird die Lage der ersten, zweiten und/ oder dritten Verbindungsstrebe 40, 50, 60 verstellt. Dies wirkt sich auf die Position und Lage des zweiten Dreiecks 81 zum ersten Dreieck 80. Somit kann in der Anwendung der Ausgestaltung gemäß Fig. 3 an einem Bauroboter 1 der Fig. 1 die Lage und Position der Funktionsplattform 20 gegenüber der Basis 10 und somit zur Bodenfläche beeinflusst und eingestellt werden. In Kombination oder ohne den Zwischengelenken 48, 58, 68 ist somit eine weitere Einstellbarkeit der Funktionsplattform möglich. Somit ergibt sich eine weitere Möglichkeit das Werkzeug zu positionieren und auf beispielsweise einer Schrägstellung wegen Bodenunebenheiten, Bodenschräglage und/ oder einer schrägen Auslenkung des Werkzeugs bei Vergrößern der Distanz zwischen Funktionsplattform 20 und Basis 10 entgegenzuwirken.

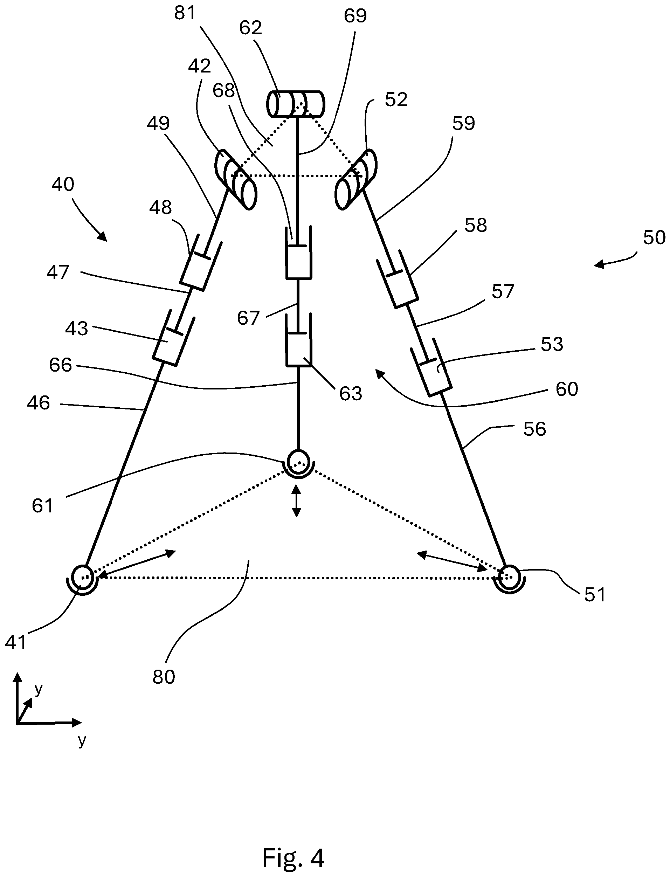

In der Fig. 4 ist eine weitere Konfiguration von kinematischen Ketten der ersten, zweiten und dritten Verbindungsstreben 40, 50, 60 dargestellt. Zur Vereinfachung wird im Wesentlichen lediglich auf die Unterschiede zu der Konfiguration gemäß Fig. 3 hingewiesen. Auch hier sind die Verbindungsstreben 40, 50, 60 dreigliedrig ausgeführt. Um Unterschied zur Ausführung gemäß Fig. 3 sind die Zwischengelenke 48, 58, 68 als prismatisches Gelenk ausgeführt. Die Zwischengelenke 48, 58, 68 bewirken eine translatorische Bewegung der zweiten Abschnitte 47, 57, 67 relativ zu den dritten Abschnitten 49, 59, 69 der entsprechenden ersten, zweiten und/ oder dritten Verbindungsstreben 40, 50, 60. Mit der vorliegenden Konfiguration kann eine größere Höhenänderung, d.h. ein Hub der Funktionsplattform 20 (s. Fig. 1) sowie eine bessere Feinjustage relativ zur Basis 10 vorgenommen werden. Auch lässt sich die Lage der Funktionsplattform 20 sowie eines Werkzeugs 30, das an die Funktionsplattform 20 gekoppelt ist, genau und schnell einstellen

Das erste prismatische Gelenk 43 der ersten Verbindungsstrebe 40 sowie das als prismatische Gelenk ausgeführte erste Zwischengelenk 48 können miteinander gekoppelt sein. In einem Ausführungsbeispiel ist das erste Zwischengelenk 48 unabhängig vom ersten prismatischen Gelenk 43 betätigbar. Dazu kann das erste Zwischengelenk 48 separat mit einem Antrieb, insbesondere einem Motor gekoppelt sein. Analoges gilt für die zweite und/ oder dritte Verbindungsstrebe 50, 60.

Wie aus der schematischen Darstellung der Fig. 4 erkennbar, sind das erste prismatische Gelenk 43 und das erste Zwischengelenk 48, welches ebenfalls als prismatisches Gelenk ausgebildet ist, koaxial angeordnet. So bilden vereinfacht das erste prismatische Gelenk 43 und das erste Zwischengelenk 48 ein mehrstufiges prismatisches Gelenk aus. Gleiche Betrachtung gilt auch für die zweite und/ oder dritte Verbindungsstrebe 50, 60.

Optional sind auch in dieser Konfiguration wie in Fig. 3 beschrieben und in den Fig. 3 und 4 schematisch dargestellt, die verstellbaren ersten, zweiten und/oder dritten Basisgelenke 41, 42, 43, welche in ihrer Position verschiebbar ausgeführt sein können. Weiterhin kann zusätzlich eine oder mehrere Verbindungsstrebe 40, 50, 60 mit einem Scharnier als Zusatzgelenk, wie in Fig. 3 als Zusatzgelenk 48, 58, 68 beschrieben, ausgeführt sein.

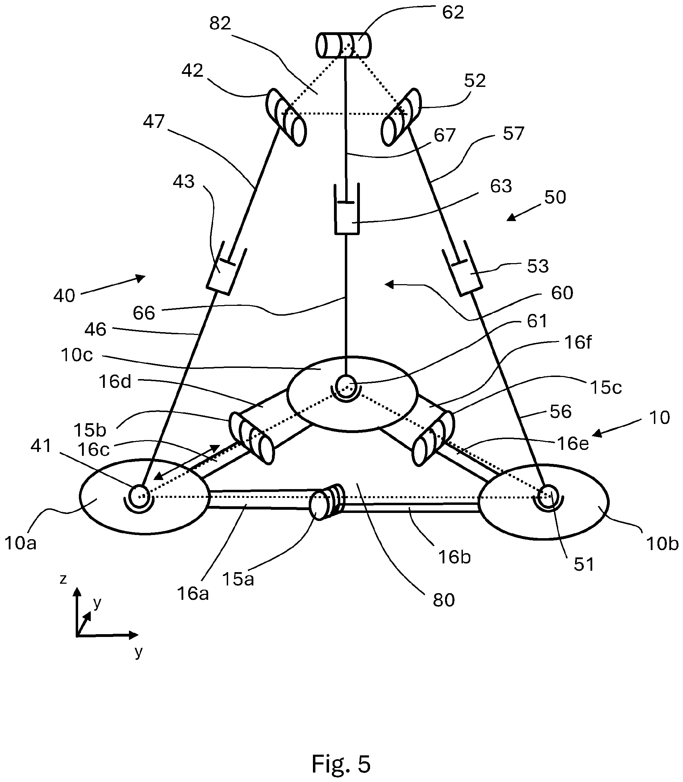

In der Fig. 5 ist ein weiteres Ausführungsbeispiel eines Bauroboters 1 der Fig. 1 dargestellt. Insbesondere wird in Fig. 5 auf die kinematischen Ketten sowie der Beziehung der ersten Verbindungsstrebe 40, zweiten Verbindungsstrebe 50 und dritten Verbindungsstrebe 60 zueinander fokussiert. Vereinfacht geht das Ausführungsbeispiel der Fig. 5 von der Konfiguration gemäß Fig. 2 aus, sodass auf eine erneute Ausführung der Zusammenhänge der Darstellung in Fig. 2 auf deren Beschreibung verwiesen wird und nachfolgend lediglich die in Fig. 5 darüber hinaus oder anderen dargestellten Merkmale näher beschrieben werden.

Die in Fig. 1 dargestellte Basis 10 umfasst im Ausführungsbeispiel der Fig. 5 drei Teilbasen 10a, 10b, 10c, wobei das erste Basisgelenk 41 der ersten Verbindungsstrebe 40 an einer ersten Teilbasis 10a gekoppelt ist, das zweite Basisgelenk 51 der zweiten Verbindungsstrebe 50 an einer zweiten Teilbasis 10b gekoppelt ist und das dritte Basisgelenk 61 der dritten Verbindungsstrebe 60 an einer dritten Teilbasis 10c gekoppelt ist. Die erste Teilbasis 10a ist über ein erstes Faltgelenk 15a mit der zweiten Teilbasis 10b verbunden. Die erste Teilbasis 10a ist über ein zweites Faltgelenk 15b mit der dritten Teilbasis 10c verbunden. Weiterhin ist die zweite Teilbasis 10b über ein drittes Faltgelenk 15c mit der dritten Teilbasis 10c verbunden. Im Beispiel der Fig. 5 ist dabei die erste Teilbasis 10a über einen ersten Verbindungssteg 16a mit dem ersten Faltgelenk 15a verbunden und das erste Faltgelenk 15a ist über einen zweiten Verbindungssteg 16b mit der zweiten Teilbasis 10b verbunden. Die erste Teilbasis 10c ist über einen dritten Verbindungssteg 16c mit dem zweiten Faltgelenk 15b verbunden und das zweite Faltgelenk 15b ist über einen vierten Verbindungssteg 16d mit der dritten Teilbasis 10c verbunden. Die zweite Basis 10b ist über einen fünften Verbindungssteg 16e mit dem dritten Faltgelenk 15c verbunden und das dritte Faltgelenk 15c ist über einen sechsten Verbindungssteg 16f mit der dritten Teilbasis 10c verbunden.

Jede der drei Teilbasen 10a, 10b und 10c weist einen Antrieb (nicht dargestellt) und ein Fahrwerk mit wenigstens einem Rad oder einer Fahrkette (nicht dargestellt). Eine der Teilbasen 10a, 10b, 10c und/ oder wenigstens ein entsprechendes Fahrwerk kann eine Energiequelle aufweisen. Eine elektrische Kommunikation zwischen dem wenigstens einen Antrieb, Energiequelle und/ oder einer Steuerung sind über elektrische Leitungen statt. Die elektrischen Leitungen erstrecken sich vorzugsweise wenigstens zwischen erster Teilbasis 10a und zweiter Teilbasis 10b, zwischen zweiter Teilbasis 10b und dritter Teilbasis 10c und/ oder zwischen erster Teilbasis 10a und dritter Teilbasis 10c. Dabei kann vorgesehen sein, dass die elektrischen Leitungen entsprechend über den ersten, zweiten, dritten, vierten, fünften und/ oder sechsten Verbindungssteg 16a-f sowie entsprechend über erstem, zweiten und/ oder dritten Faltgelenk 15a, 15b, 15c verläuft.

Im Betriebszustand des Bauroboters 1 wären das erste Faltgelenk 15a, das zweite Faltgelenk 15b und das dritte Faltgelenk 15c jeweils aufgeklappt. Dies bedeutet vorliegend, dass eine Längserstreckung des ersten Verbindungsstegs 16a gleich einer Längserstreckung des zweiten Verbindungsstegs 16b ist. Weiterhin wäre eine Längserstreckung des dritten Verbindungsstegs 16c gleich einer Längserstreckung des vierten Verbindungsstegs 16d und eine Längserstreckung des fünften Verbindungsstegs 16e gleich einer Längserstreckung des sechsten Verbindungsstegs. Während des Betriebs verbleiben das erste, zweite und dritte Faltgelenk 15a, 15b, 15c in dieser Position, beispielsweise mittels einer Sicherung.

Im Nichtbetriebszustand des Bauroboters 1 kann zu dessen einfachen Transport und zur einfachen Lagerung das erste Faltgelenk 15a, das zweite Faltgelenk 15b und/ oder das dritte Faltgelenk 15c betätigt und zusammengeklappt werden, so dass der Bauroboter 1 zumindest partiell zusammengefaltet wird. Dies wird zusätzlich durch die kinematischen Ketten mit fünf Bewegungsfreiheitsgraden und einem aktiv beaufschlagten prismatischen Gelenk ermöglicht. Dabei ist zum einen möglich, dass die durch die erste, zweite und dritte Teilbasis 10a, 10b, 10c im Betriebszustand des Bauroboters 1 aufgespannte Fläche der Basis 10 verkleinert wird, in dem beispielsweise die erste Teilbasis 10a zur zweiten Teilbasis 10b und/ oder dritten Teilbasis 10c gelappt wird, die zweite Teilbasis 10b zur ersten Teilbasis 10a und/ oder zur dritten Teilbasis 10c geklappt wird und/ oder die dritte Teilbasis 10c zur ersten Teilbasis und/ oder zur zweiten Teilbasis 10b geklappt wird.

Darüber hinaus kann das durch das erste, zweite und dritte Funktionsplattformgelenk aufgespannte zweite Dreieck 81 durch selektive Betätigung des ersten, zweiten und/ dritten prismatischen Gelenks 43, 53, 63 und entsprechende Längenänderung der ersten, zweiten und dritten Verbindungsstrebe 40, 50, 60 umgeklappt werden.

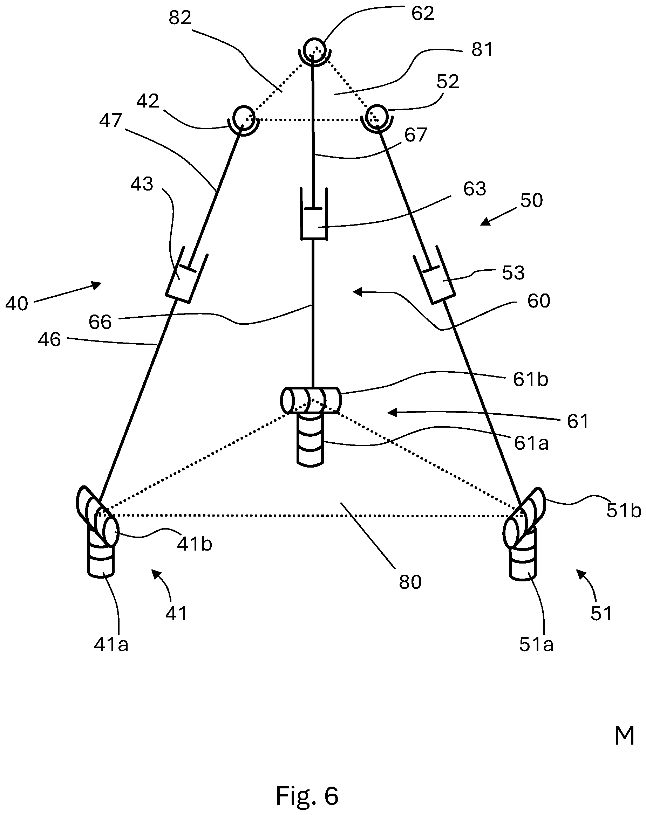

Die Figur 6 zeigt eine weitere Konfiguration der kinematischen Ketten und ihren Wirkzusammenhang an einem Bauroboter 1 ausgehend Fig. 1 und Fig. 2. Zur Vereinfachung und zum besseren Verständnis wird lediglich auf die Unterschiede hingewiesen.

Die erste, zweite und dritte Verbindungsstrebe 40, 50, 60 ist jeweils länglich und zweiteilig ausgeführt und weisen jeweils einen ersten Abschnitt 46, 56, 66 und einen zweiten Abschnitt 47, 57, 69 auf. Der erste Abschnitt 46 und der zweite Abschnitt 47 der ersten Verbindungsstrebe 40 sind durch ein erstes prismatisches Gelenk 43 verbunden. Somit können sich der erste Abschnitt 46 und der zweite Abschnitt 47 der ersten Verbindungsstrebe 40 translatorisch zueinander bewegen und die Länge der ersten Verbindungsstrebe 40 in ihrer Längserstreckung ändern.

Der erste Abschnitt 56 und der zweite Abschnitt 57 der zweiten Verbindungsstrebe 50 sind durch ein zweites prismatisches Gelenk 53 verbunden. Somit können sich der erste Abschnitt 56 und der zweite Abschnitt 56 der zweiten Verbindungsstrebe 50 translatorisch zueinander bewegen und die Länge der zweiten Verbindungsstrebe 50 in ihrer Längserstreckung ändern.

Der erste Abschnitt 66 und der zweite Abschnitt 67 der dritten Verbindungsstrebe 60 sind durch ein drittes prismatisches Gelenk 43 verbunden. Somit können sich der erste Abschnitt 66 und der zweite Abschnitt 67 der dritten Verbindungsstrebe 60 translatorisch zueinander bewegen und die Länge der dritten Verbindungsstrebe 60 in ihrer Längserstreckung ändern.

An einem Ende der ersten Verbindungsstrebe 40 ist ein erstes Funktionsplattformgelenk 42 angeordnet. Im Unterschied zur Ausgestaltung der Fig. 1 und 2 ist das erste Funktionsplattformgelenk 42 ein sphärisches Gelenk, beispielsweise ein Kugelgelenk. Das erste Funktionsplattformgelenk 42 ist mit einer Funktionsplattform (s. Fig. 1; in Fig. 6 nicht dargestellt) verbunden. Am dem ersten Funktionsplattformgelenk 42 gegenüberliegenden Ende der ersten Verbindungsstrebe 40 ist ein erstes Basisgelenk 41 zur Verbindung mit einer Basis (s. Fig. 1; in Fig. 6 nicht dargestellt) angeordnet. Im Unterschied zur Ausführung der Fig. 1 und 2 ist das erste Basisgelenk 41 als Gelenk mit zwei Bewegungsfreiheitsgraden ausgebildet. Das erste Basisgelenk 41 weist ein erstes Scharniergelenk 41a und ein zweites Scharniergelenk 41b, wobei die Schwenkachse des ersten Scharniergelenks 41a und die Schwenkachse des zweiten Scharniergelenks 41b des ersten Basisgelenks 41 nicht koaxial verlaufen. Das erste und das zweite Scharniergelenk 41a, 41b des ersten Basisgelenks 41 sind miteinander gekoppelt.

An einem Ende der zweiten Verbindungsstrebe 50 ist ein zweites Funktionsplattformgelenk 52 angeordnet. Im Unterschied zur Ausgestaltung der Fig. 1 und 2 ist das zweite Funktionsplattformgelenk 52 ein sphärisches Gelenk, beispielsweise ein Kugelgelenk. Das zweite Funktionsplattformgelenk 52 ist mit einer Funktionsplattform (s. Fig. 1; in Fig. 6 nicht dargestellt) verbunden. Am dem zweiten Funktionsplattformgelenk 52 gegenüberliegenden Ende der zweiten Verbindungsstrebe 50 ist ein zweites Basisgelenk 51 zur Verbindung mit der Basis (s. Fig. 1; in Fig. 6 nicht dargestellt) angeordnet. Im Unterschied zur Ausführung der Fig. 1 und 2 ist das zweite Basisgelenk 51 als Gelenk mit zwei Bewegungsfreiheitsgraden ausgebildet. Das zweite Basisgelenk 51 weist ein erstes Scharniergelenk 51a und ein zweites Scharniergelenk 51b, wobei die Schwenkachse des ersten Scharniergelenks 51a und die Schwenkachse des zweiten Scharniergelenks 51b des zweiten Basisgelenks 51 nicht koaxial verlaufen. Das erste und das zweite Scharniergelenk 51a, 51b des zweiten Basisgelenks 51 sind miteinander gekoppelt.

An einem Ende der dritten Verbindungsstrebe 60 ist ein drittes Funktionsplattformgelenk 62 angeordnet. Im Unterschied zur Ausgestaltung der Fig. 1 und 2 ist das dritte Funktionsplattformgelenk 62 ein sphärisches Gelenk, beispielsweise ein Kugelgelenk. Das dritte Funktionsplattformgelenk 62 ist mit einer Funktionsplattform (s. Fig. 1; in Fig. 6 nicht dargestellt) verbunden. Am dem dritten Funktionsplattformgelenk 62 gegenüberliegenden Ende der zweiten Verbindungsstrebe 60 ist ein drittes Basisgelenk 51 zur Verbindung mit der Basis (s. Fig. 1; in Fig. 6 nicht dargestellt) angeordnet. Im Unterschied zur Ausführung der Fig. 1 und 2 ist das dritte Basisgelenk 61 als Gelenk mit zwei Bewegungsfreiheitsgraden ausgebildet. Das dritte Basisgelenk 51 weist ein erstes Scharniergelenk 61a und ein zweites Scharniergelenk 61b, wobei die Schwenkachse des ersten Scharniergelenks 61a und die Schwenkachse des zweiten Scharniergelenks 61b des dritten Basisgelenks 61 nicht koaxial verlaufen. Das erste und das zweite Scharniergelenk 61a, 61b des dritten Basisgelenks 61 sind miteinander gekoppelt.

Das erste, zweite und dritte Basisgelenk 41, 51, 61 spannen miteinander ein erstes Dreieck 80 auf. Das erste, zweite und dritte Funktionsgelenk 42, 52, 62 spannen miteinander ein zweites Dreieck 81 auf.

Aufgrund des ersten Scharniergelenks 61a des ersten, zweiten und dritten Basisgelenks 41, 51, 61 ist die von der ersten, zweiten und dritten Verbindungsstrebe 40, 50, 60 aufgespannte Schwenkebene über das jeweilige zweite Schwenkgelenk 41b, 51b, 61b des ersten, zweiten bzw. dritten Basisgelenks 41, 51, 61 über die Schwenkachse des ersten Schwenkgelenks 41a, 51a, 61a rotierbar. Eine Beaufschlagung des ersten Schwenkgelenks 41a, 51a, 61a des ersten, zweiten und/ oder dritten Basisgelenks 41, 51, 61 beeinflusst damit die Lage und Position des zweiten Dreiecks 81 relative zum ersten Dreieck 80. Insbesondere wird damit auch eine rotatorische Bewegung des zweiten Dreiecks 81 relativ zum ersten Dreieck 80 hervorgerufen.

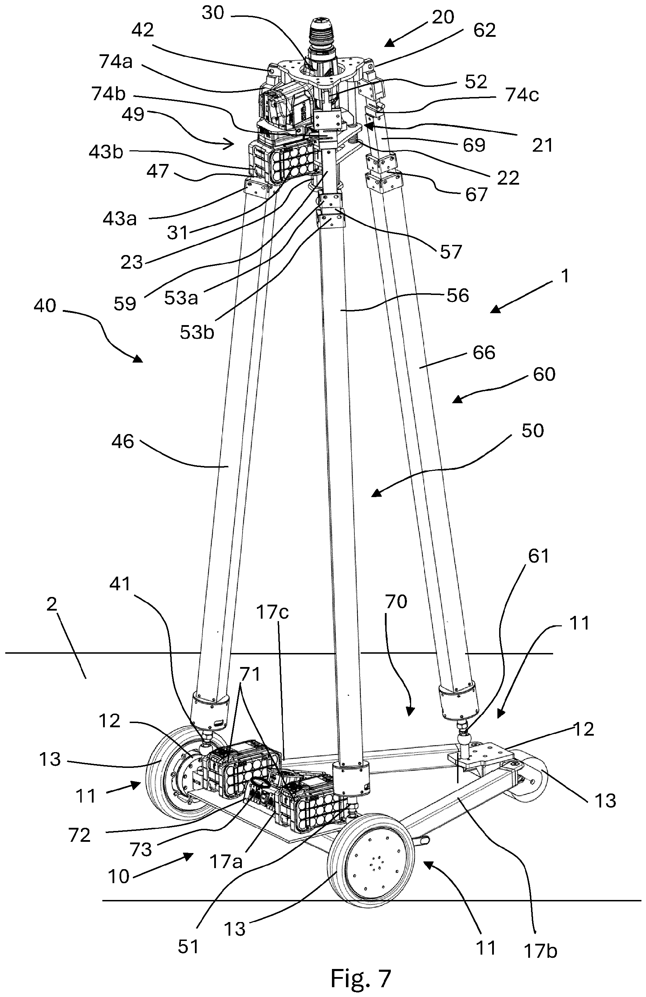

In der Figur 7 ist eine weitere schematische Darstellung eines Bauroboters 1 dargestellt. Der Bauroboter 1 ist zur Bewegung und Anordnung auf einer Bodenfläche 2 ausgebildet. Der Bauroboter 1 weist eine Basis 10 und eine Funktionsplattform 20 auf. Dabei ist die Basis 10 nahe der Bodenfläche 2 angeordnet. Die Basis 10 umfasst eine Trägerstruktur, gebildet aus einen ersten Verbindungsträger 17a, einen zweiten Verbindungsträger 17b und einen dritten Verbindungsträger 17b, welche im Wesentlichen in einem Dreieck angeordnet sind und entsprechend die Seitenkanten des Dreiecks bilden. Die Basis 10 umfasst vorliegend an den Ecken des durch den ersten, zweiten und dritten Verbindungsträger 17a, 17b, 17c gebildeten Dreiecks jeweils eine Fahreinheit 11 mit einem Fahrwerk 12 und daran angeordnete Reifen 13 auf.

Von der Basis 10 erstrecken sich im Beispiel der Figur 7 eine erste Verbindungsstrebe 40, eine zweite Verbindungsstrebe 50 und eine dritte Verbindungsstrebe 60 von der Bodenfläche 2 weg in Richtung der Funktionsplattform 20. Die erste, zweite und dritte Verbindungsstrebe 40, 50, 60 sind vorliegend als Rohr im Wesentlichen länglich ausgebildet.

Die erste Verbindungsstrebe 40 ist an einem Ende über ein erstes Basisgelenk 41, vorliegend ein Kugelgelenk, mit der Basis 10 verbunden. Weiterhin weist die zweite Verbindungsstrebe 50 an einem Ende ein zweites Basisgelenk 51 auf, das mit der Basis 10 verbunden ist. Die dritte Verbindungsstrebe 60 weist an einem Ende ein drittes Basisgelenk 61 auf. Das dritte Basisgelenk 61 ist mit der Basis 10 verbunden. Im vorliegenden Ausführungsbeispiel sind das erste, zweite und dritte Basisgelenk 41, 51, 61 jeweils mit einer Ecke des an der Basis durch den ersten, zweiten und dritten Verbindungsträger gebildeten Dreiecks verbunden.

Die erste Verbindungsstrebe 40 weist an dem ersten Basisgelenk 41 gegenüberliegenden Ende ein erstes Funktionsplattformgelenk 42 auf. Die zweite Verbindungsstrebe 50 weist an dem zweiten Basisgelenk 51 gegenüberliegenden Ende ein zweites Funktionsplattformgelenk 52 auf. Die dritte Verbindungsstrebe 60 weist an dem dritten Basisgelenk 61 gegenüberliegenden Ende ein drittes Funktionsplattformgelenk 62 auf. Das erste, zweite und dritte Funktionsplattformgelenk 42, 52, 62 sind an der Funktionsplattform 20 angeordnet. Weiterhin sind das erste, zweite und dritte Funktionsplattformgelenk 42, 52, 62 als Scharnier ausgebildet, d.h. als sogenanntes revolut joint mit einer Bewegungsfreiheit. Das erste, zweite und dritte Funktionsplattformgelenk sind so zueinander ausgerichtet, dass wenigsten zwei deren Schwenkachsen nicht koaxial verlaufen. Im vorliegenden Ausführungsbeispiel sind die Funktionsplattformgelenke 42, 52, 62 so angeordnet, dass ihre Anordnung ein zweites Dreieck ausbilden. Zudem ist die Schwenkachse des ersten, zweiten und dritten Funktionsplattformgelenks 42, 52, 62 parallel zur Ebene des zweiten Dreiecks orientiert, wobei weiterhin eine normale deren Schwenkachse durch den Flächenschwerpunkt des zweiten Dreiecks verläuft.

Die erste Verbindungsstrebe 40 weist zwischen dem ersten Basisgelenk 41 und dem ersten Funktionsplattformgelenk 42 ein erstes prismatisches Gelenk 43, umfassend ein erstes hilfsprismatisches Gelenk 43a und ein zweites hilfsprismatisches Gelenk 43b auf. Somit ist die erste Verbindungsstrebe 40 ausgebildet, teleskopartig mit einem ersten Abschnitt 46, einem zweiten Abschnitt 47 und einen dritten Abschnitt 49, ihre Länge zu verändern. Dabei sind der erste Abschnitt 46, der zweite Abschnitt 47 und der dritte Abschnitt 49 translatorisch zueinander beweglich, so dass der zweite Abschnitt 47 in den ersten Abschnitt 46 gleitbar ausgebildet ist und der dritte Abschnitt 49 in den zweiten Abschnitt 46 gleitbar ausgebildet ist. Das erste hilfsprismatische Gelenk 43a entspricht dem in Figur 4 dargestellten ersten prismatischen Gelenk 43 und das zweite hilfsprismatische Gelenk 43b entspricht dem in Figur 4 dargestellten erstem Zwischengelenk 48.

Die zweite Verbindungsstrebe 50 weist zwischen dem zweiten Basisgelenk 51 und dem zweiten Funktionsplattformgelenk 52 ein zweites prismatisches Gelenk 53, umfassend ein erstes hilfsprismatisches Gelenk 53a und ein zweites hilfsprismatisches Gelenk 53b auf. Somit ist die zweite Verbindungsstrebe 50 ausgebildet, teleskopartig mit einem ersten Abschnitt 56, einem zweiten Abschnitt 57 und einen dritten Abschnitt 59, ihre Länge zu verändern. Dabei sind der erste Abschnitt 56, der zweite Abschnitt 57 und der dritte Abschnitt 59 translatorisch zueinander beweglich, so dass der zweite Abschnitt 57 in den ersten Abschnitt 56 gleitbar ausgebildet ist und der dritte Abschnitt 59 in den zweiten Abschnitt 56 gleitbar ausgebildet ist. Das erste hilfsprismatische Gelenk 53a entspricht dem in Figur 4 dargestellten zweiten prismatischen Gelenk 43 und das zweite hilfsprismatische Gelenk 53b entspricht dem in Figur 4 dargestellten zweiten Zwischengelenk 58.

Die dritte Verbindungsstrebe 60 weist zwischen dem dritten Basisgelenk 61 und dem dritten Funktionsplattformgelenk 62 ein drittes prismatisches Gelenk 63, umfassend ein erstes hilfsprismatisches Gelenk 63a und ein zweites hilfsprismatisches Gelenk 63b auf. Somit ist die dritten Verbindungsstrebe 60 ausgebildet, teleskopartig mit einem ersten Abschnitt 66, einem zweiten Abschnitt 67 und einen dritten Abschnitt 69, ihre Länge zu verändern. Dabei sind der erste Abschnitt 66, der zweite Abschnitt 67 und der dritte Abschnitt 69 translatorisch zueinander beweglich, so dass der zweite Abschnitt 67 in den ersten Abschnitt 66 gleitbar ausgebildet ist und der dritte Abschnitt 69 in den zweiten Abschnitt 66 gleitbar ausgebildet ist. Das erste hilfsprismatische Gelenk 63a entspricht dem in Figur 4 dargestellten dritten prismatischen Gelenk 63 und das zweite hilfsprismatische Gelenk 63b entspricht dem in Figur 4 dargestellten dritten Zwischengelenk 68.

Die Funktionsplattform 20 weist eine Befestigungsschnittstelle 21 auf. Die Befestigungsschnittstelle 21 ist ausgebildet, ein Werkzeug 30, vorliegend ein Bohrhammer, zu befestigen. Im Beispiel der Fig. 7 ist der Bauroboter 1 dazu konfiguriert, die Arbeitsposition an einer Decke anzufahren und beispielsweise an der Decke ein Loch zu bohren. Dazu ist der Bohrhammer so angeordnet und ausgerichtet, dass ein Bohrer (nicht dargestellt) entgegen der Decke ausgerichtet ist. Üblicherweise ist der Bohrhammer so angeordnet, dass der Bohrer mit seinem Bohrkopf senkrecht zur Decke zeigt. Je nach Arbeitsprozess, der mit dem Werkzeug ausgeführt werden soll, kann das Werkzeug anstelle senkrecht zur Decke auch in einem Winkel zwischen 0° und 90° zur Decke ausgerichtet sein. Auch wenn hier eine Ausrichtung zur Decke genannt ist, so ist dies nur beispielhaft. Analoges gilt für die Bearbeitung an einer Arbeitsposition an einer Wand. Das Werkzeug 30 ist über einen Dämpfer 22 an der Funktionsplattform 20 befestigt. Somit werden Impulse, Kräfte durch die Bearbeitung der Arbeitsposition mit dem Werkzeug nicht auf die Funktionsplattform 20, die erste, zweite oder dritte Verbindungsstrebe 40, 50, 60 und/ oder der Basis 10 übertragen und umgekehrt.

Die Funktionsplattform 20, insbesondere die Befestigungsschnittstelle 21, kann eine Kommunikations- und/ oder Energieschnittstelle aufweisen. Über die Kommunikationsschnittstelle ist eine Datenkommunikation zwischen einer Steuerung 72 und dem Werkzeug 30 möglich.

Im Ausführungsbeispiel der Fig. 7 ist an der Basis 10 ein Steuergerätegehäuse 70 angeordnet. Der Betriebsschrank 70 ist an dem ersten Verbindungssteg 17a montiert. Neben dem Steuergerätegehäuse 70 sind zwei Batterieeinschübe 71 zur Aufnahme von Batterien als Energiequelle angeordnet. Weiterhin weist das Steuergerätegehäuse 70 die Steuerung 72 auf. Am Gehäuse des Steuergerätegehäuses 70 sind eine mit der Steuerung 72 verbundene Benutzerschnittstelle, wie eine Anzeige und/ oder Schalter, und eine Datenkommunikationsschnittstelle angeordnet. Weiterhin ist an dem Steuergerätegehäuse 70 eine Antenne 73 zur Kommunikation des Bauroboters 1, insbesondere der Steuerung 72, über eine Luftschnittstelle, beispielsweise WLAN, angeordnet. Anstelle oder zusätzlich der am Steuergerätegehäuse 70 angeordneten Antenne 72 kann das Steuergerätegehäuse 70 eine intern angeordnete Antenne aufweisen.

Der Bauroboter weist eine drahtgebundene und/ oder drahtlose Kommunikation zwischen dem Werkzeug 30 und der Steuerung 72 auf. Die Kommunikation zwischen dem Werkzeug und der Steuerung umfasst vorliegend auch die Energieversorgung des Werkzeugs 30 durch die in den Batterieeinschüben 71 angeordneten Batterien. Alternativ oder zusätzlich kann das Werkzeug 30 entweder autonom vom Bauroboter mit einer Batterie 31 versorgt werden oder zusätzlich zum Bauroboter 1 mit einer Batterie 31 ausgestattet sein.

Weiterhin sind am Bauroboter 1 verschiedene Sensoren angeordnet. So ist an der ersten, zweiten und dritten Verbindungsstrebe 40, 50, 60 entsprechend ein erster, zweiter und dritter Kraftsensor 73a, 73b, 73c angeordnet. Mithilfe des ersten, zweiten und dritten Kraftsensors kann die Kraft der ersten, zweiten und dritten Verbindungsstrebe 40, 50, 60 ermittelt werden, die in deren Längserstreckung wirkt. Daraus kann auf eine Beschleunigung geschlossen werden, woraus sich ergibt, wie das Arbeitsverhalten des Werkzeugs 30 ist, welche Bewegung während des Betriebs des Werkzeugs 30 ausgeführt wird, wann die Arbeitsposition erreicht wird und während des Betriebs welche Tiefe erreicht ist. Darüber hinaus kann eine definierte Anpresskraft des Werkzeugs 30 an der Arbeitsposition vor und während der Prozessausführung durch das Werkzeug 30 ermittelt und schließlich angepasst werden.

In der Ausführungsform der Fig. 7 ist an der Funktionsplattform 20 ein Positionserkennungsreflektor 23 in der Ausgestaltung eines Prismas 23 angeordnet. Das Prisma 23 ermöglicht die Detektion der Position des Bauroboters in einem Arbeitsraum durch ein zum Bauroboter externes Detektionsgerät, beispielsweise einer Totalstation.

Zudem ist an der Funktionsplattform 20 in einer Ausführungsform wenigstens ein Neigungssensor (nicht dargestellt) angeordnet. Mithilfe des Neigungssensors kann eine Neigung der Funktionsplattform 20 und daraus folgend eine Neigung der Funktionsplattform 20 zur Horizontalen und somit die Lage der Funktionsplattform 20 ermittelt werden. Diese Information wird vorzugsweise bei der Steuerung des Bauroboters 1 berücksichtig. Vorzugsweise umfasst der Bauroboter mehrere Lagesensoren an der Funktionsplattform 20, damit die Lage der Funktionsplattform 20 nicht nur in einer Dimension, sondern in mehrere Dimensionen erfasst wird. Ein Neigungssensor kann ausgestaltet sein, dass er zur genauen Ermittlung der Neigung einen Relativwert zu einem weiteren Neigungssensor an der Basis 10 ausgibt.

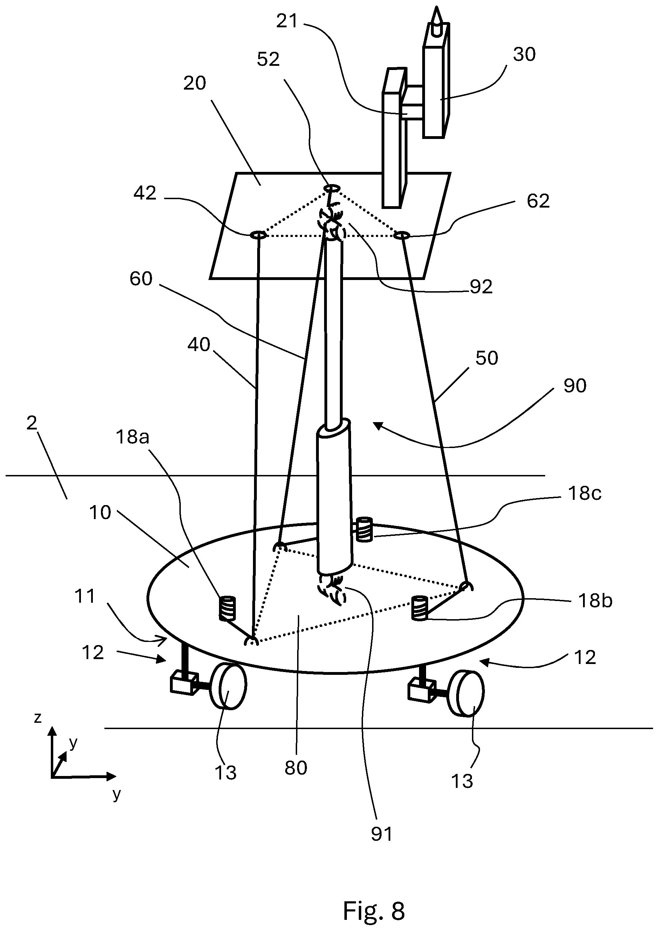

Die Figur 8 zeigt ein weiteres Ausführungsbeispiel eines Bauroboters 1. Der Bauroboter 1 umfasst eine Basis 10. An der Basis 10 sind an ihrer Unterseite, d.h. an einer zu einer Bodenfläche 2 gerichteten Seite der Basis 10, eine Fahreinheit 11 mit drei Fahrwerke 12 mit jeweils einen Reifen 13 angeordnet.

An einer der Bodenfläche 2 gegenüberliegender Seite des Bauroboters 1 weist der Bauroboter 1 eine Funktionsplattform 20 auf. Von einer der Basis 10 zugewandten Seite der Funktionsplattform 20 erstrecken sich eine erste, eine zweite und eine dritte Verbindungsstrebe 40, 50, 60 zur Basis 10. Die erste, zweite und dritte Verbindungsstrebe 40, 50, 60 sind aus einem langgestreckten, flexiblen Material, wie beispielsweise Seil.

Jede der Verbindungsstrebe 40, 50, 60 ist länglich ausgebildet und weist an einem Ende, welches der Funktionsplattform 20 zugewandt ist, entsprechend ein erstes, ein zweites und ein drittes Funktionsgelenk 42, 52, 62 auf. Das erste, zweite und dritte Funktionsgelenk 42, 52, 62 sind jeweils als sphärisches Gelenk ausgebildet und umfassen drei Bewegungsfreiheitsgrade. Das erste Funktionsgelenk 42 verbindet die erste Verbindungsstrebe 40 mit der Funktionsplattform 20. Das zweite Funktionsgelenk 52 verbindet die zweite Verbindungsstrebe 50 mit der Funktionsplattform 20 und das dritte Funktionsgelenk 62 verbindet die dritte Verbindungsstrebe 60 mit der Funktionsplattform 20.

An der Basis 10 sind an der Funktionsplattform 20 zugewandten Seite ein erstes, zweites und drittes Basisgelenk 41, 51, 61 angeordnet, die miteinander ein erstes Dreieck 80 aufspannen. Das erste, zweite und dritte Basisgelenk 41, 51, 61 ist als sphärisches Gelenk ausgebildet und weist 3 Bewegungsfreiheitsgrade auf. Das erste, zweite und dritte Basisgelenk 41, 51, 61 sind im Beispiel der Fig. 8 ein Umlenkbügel oder eine Umlenkrolle. Die erste Verbindungsstrebe 40 erstreckt sich vom ersten Funktionsplattformgelenk 42 zum ersten Basisgelenk 41 und von dem ersten Basisgelenk 41 auf einen ersten Aufwickler 18a. Die zweite Verbindungsstrebe 50 erstreckt sich vom zweiten Funktionsplattformgelenk 52 zum zweiten Basisgelenk 51 und von dem zweiten Basisgelenk 51 zu einem zweiten Aufwickler 18b. Die dritte Verbindungsstrebe 60 erstreckt sich vom zweiten Funktionsplattformgelenk 62 zum dritten Basisgelenk 61 und von dem zweiten Basisgelenk 61 zu einem dritten Aufwickler 18c. Der erste, zweite und dritte Aufwickler 18a, 18b, 18c sind an der Basis 10 angeordnet.

Zwischen der Basis 10 und der Funktionsplattform 20 ist eine Hubvorrichtung 90 in Form eines Hubzylinders 90 angeordnet und verbindet die Basis 10 mit der Funktionsplattform 20. Der Hubzylinder 90 hat die Funktion einer pneumatischen Feder und übt somit bei Beaufschlagung eine Kraft nach oben, d. h. von der Basis 10 zur Funktionsplattform 20 aus. Dabei expandiert der Hubzylinder 90 in Längserstreckung, d.h. in Richtung von der Basis 10 zur Funktionsplattform 20. Der Hubzylinder 90 ist über ein Hubbasisgelenk 91 mit der Basis 10 verbunden und über ein Hubfunktionsplattformgelenk 92 mit der Hubplattform 20 verbunden. Das Hubbasisgelenk 91 und das Hubfunktionsplattformgelenk 92 sind als Kardangelenk, d.h. ein sogenanntes universal joint, mit zwei Bewegungsfreiheitsgraden, ausgebildet und weisen zwei Schwenkachsen auf, die senkrecht zueinander jedoch parallel zur Ebene des ersten Dreiecks angeordnet sind.

Der erste, zweite und dritte Aufwickler 18a, 18b, 18c sind angetrieben, beispielsweise jeweils mittels Motors. Der Hubzylinder 90 übt eine Kraft auf die Funktionsplattform 20 aus und drückt sie von der Basis weg. Dies wird durch die erste, zweite und dritte Verbindungsstrebe 40, 50, 60 durch ihre Länge stabilisiert. Eine Längenänderung der ersten, zweiten und dritten Verbindungsstrebe 40, 50, 60 bewirkt eine Distanzänderung zwischen Basis 10 und Funktionsplattform 20. Die Längenänderung wird jeweils durch ersten, zweiten und dritten Aufwickler 18a, 18b, 18c beeinflusst. Werden die erste, zweite und dritte Verbindungsstrebe 40, 50, 60 am jeweiligen ersten, zweiten und dritten Aufwickler 18a, 18b, 18c aufgewickelt, bewirkt dies eine Verkleinerung der Länge der ersten, zweiten und dritten Verbindungsstrebe 40, 50, 60. Die Funktionsplattform 20 wird entgegen der Kraft des Hubzylinders 90 entgegen der Basis 10 bewegt. Werden die erste, zweite und dritte Verbindungsstrebe 40, 50, 60 am jeweiligen ersten, zweiten und dritten Aufwickler 18a, 18b, 18c abgewickelt, bewirkt dies eine Vergrößerung der Länge der ersten, zweiten und dritten Verbindungsstrebe 40, 50, 60. Die Funktionsplattform 20 wird durch die ausgeübte Kraft des Hubzylinders 90 von der Basis 10 wegbewegt. Ein selektives Aufrollen und/ oder Abrollen eines der Aufwickler 18a, 18b, 18c bewirkt bei gleichbleibender Kraftausübung des Hubzylinders 90 eine Bewegung des zweiten Dreiecks 81 entlang einer Linie. Ein individuelles Aufrollen und/ oder Abrollen von zwei der Aufwickler 18a, 18b, 18c bewirkt eine Bewegung des zweiten Dreiecks 81 in einem Flächenbereich. Ein individuelles Aufrollen und/ oder Abrollen der drei Aufwickler 18a, 18b, 18c bewirkt ein Bewegen des zweiten Dreiecks 81 in einem dreidimensional begrenzten Raum. Zudem kann durch separates Beaufschlagen des Hubzylinders 90 die Distanz zwischen Funktionsplattform 20 zur Basis 10 angepasst werden.

An der Funktionsplattform 20 ist eine Befestigungsschnittstelle 21 zur Befestigung eines Werkzeugs 30 angeordnet.

Mit der Ausführung der Fig. 8 kann mittels flexiblen Verbindungsstreben 40, 50, 60 die Lage und Position der Funktionsplattform 20 relativ zur Basis 10 und somit zur Bodenfläche angepasst werden.

In der hier aufgeführten Beschreibung sind Ausgestaltungen vom ersten, zweiten und dritten Basisgelenk sowie vom ersten, zweiten und dritten Funktionsplattformgelenk angegeben. Selbstverständlich ist es auch möglich, die Konfiguration von Basisgelenk und Funktionsgelenk je Verbindungsstrebe zu tauschen, so dass beispielsweise der Gelenktyp des ersten Basisgelenks mit dem Gelenktyp des ersten Funktionsplattformgelenks getauscht wird. Analoges gilt beispielsweise für die Gelenktypen an der zweiten und dritten Verbindungsstrebe.

Darüber hinaus sind die in den Figuren dargestellten und hier beschriebenen Ausführungsformen nur beispielhaft. Es versteht sich selbst, dass eine Kombination von Merkmalen verschiedener Ausführungsformen, sofern von den Patentansprüchen abgedeckt möglich ist.

### Bezugszeichenliste

- 1: Bauroboter
- 2: Bodenfläche
- 10: Basis
- 10a: erste Teilbasis
- 10b: zweite Teilbasis
- 10c: dritte Teilbasis
- 11: Fahreinheit
- 12: Fahrwerk
- 13: Reifen
- 14: Antriebseinheit
- 15a: erstes Faltgelenk
- 15b: zweites Faltgelenk
- 15c: drittes Faltgelenk
- 16a: erster Verbindungssteg
- 16b: zweiter Verbindungssteg
- 16c: dritter Verbindungssteg
- 16d: vierter Verbindungssteg
- 16e: fünfter Verbindungssteg
- 16f: sechster Verbindungssteg
- 17a: erster Verbindungsträger
- 17b: zweiter Verbindungsträger
- 17c: dritter Verbindungsträger
- 20: Funktionsplattform
- 21: Befestigungsschnittstelle
- 22: Schnittstelle
- 23: Prisma
- 30: Werkzeug
- 40: erste Verbindungsstrebe
- 41: erstes Basisgelenk
- 41a: erstes Scharniergelenk
- 41b: zweites Scharniergelenk
- 42: erstes Funktionsplattformgelenk
- 43: erstes prismatisches Gelenk
- 43a: erstes hilfsprismatische Gelenk
- 43b: zweites hilfsprismatische Gelenk
- 44: erster Teleskopauszug
- 45: erster Teleskopantrieb
- 46: erster Abschnitt
- 47: zweiter Abschnitt
- 48: erstes Zwischengelenk
- 49: dritter Abschnitt
- 50: zweite Verbindungsstrebe
- 51: zweites Basisgelenk
- 51a: erstes Scharniergelenk
- 51b: zweites Scharniergelenk
- 52: zweites Funktionsplattformgelenk
- 53: zweites prismatisches Gelenk
- 63a: erstes hilfsprismatische Gelenk
- 63b: zweites hilfsprismatische Gelenk
- 54: zweiter Teleskopauszug
- 55: zweiter Teleskopantrieb
- 56: erster Abschnitt
- 57: zweiter Abschnitt
- 58: zweites Zwischengelenk
- 59: dritter Abschnitt
- 60: dritte Verbindungsstrebe
- 61: drittes Basisgelenk
- 61a: erstes Scharniergelenk
- 61b: zweites Scharniergelenk
- 62: drittes Funktionsplattformgelenk
- 63: drittes prismatisches Gelenk
- 63a: erstes hilfsprismatische Gelenk
- 63b: zweites hilfsprismatische Gelenk
- 64: dritter Teleskopauszug
- 65: dritter Teleskopantrieb
- 66: erster Abschnitt
- 67: zweiter Abschnitt
- 68: drittes Zwischengelenk
- 59: dritter Abschnitt
- 70: Steuergerätegehäuse
- 71: Batterieeinschub
- 72: Steuerung
- 73: Antenne
- 74a: erster Kraftsensor
- 74b: zweiter Kraftsensor
- 74c: dritter Kraftsensor
- 80: erstes Dreieck
- 81: zweites Dreieck
- 90: Hubvorrichtung, Hubzylinder
- L1: erste Längsrichtung
- L2: zweite Längsrichtung
- L3: dritte Längsrichtung

## Patentansprüche

1. **Bauroboter** (1), umfassend
- Eine Basis (10) und
- eine Funktionsplattform (20), wobei die Funktionsplattform (20) zur Anordnung eines Werkzeugs (30), insbesondere einer Bohrmaschine, einer Schleifmaschine, Markiermaschine und/ oder einer Schneidemaschine, ausgebildet ist; wobei
- die Basis und die Funktionsplattform (20) über wenigstens eine erste, eine zweite und eine dritte Verbindungsstrebe (40, 50, 60) verbunden ist,
- wobei die erste, zweite und/ oder dritte Verbindungsstrebe (40, 50, 60),
∘ vorwiegend in eine Längsrichtung (L1, L2, L3) erstreckend ausgebildet ist,
∘ über jeweils ein Basisgelenk (41, 51, 61) mit der Basis (10) schwenkbar verbunden ist, wobei die Basisgelenke (41, 51, 61) an der Basis (10) ein erstes Dreieck (80) aufspannen, und
∘ über jeweils ein Funktionsplattformgelenk (42, 52, 62) mit der Funktionsplattform (20) schwenkbar verbunden ist, wobei die Funktionsplattformgelenke (42, 52, 62) an der Funktionsplattform (20) ein zweites Dreieck (81) aufspannen;
∘ jeweils ein prismatisches Gelenk (43, 53, 63) umfasst;
∘ jeweils eine kinematische Kette mit mindestens fünf Bewegungsfreiheitsgrade ausbildet, und
∘ wenigstens einer der mindestens fünf Bewegungsfreiheitsgrade ein aktiv angetriebener Bewegungsfreiheitsgrad ist; und
- die Basis (10) eine Fahreinheit (11), ausgebildet zum Bewegen des Baurotobers (1), aufweist.

2. Bauroboter (1) nach Anspruch 1, **dadurch gekennzeichnet, dass** die erste, zweite und dritte Verbindungsstrebe (40, 50, 60) stabförmig ausgebildet sind.

3. Bauroboter (1) nach einem der vorhergehenden Ansprüche, **dadurch gekennzeichnet, dass** wenigstens drei Bewegungsfreiheitsgrade jeder der ersten, zweiten und dritten Verbindungsstrebe (40, 50, 60) als passiver Bewegungsfreiheitsgrad ausgebildet ist.

4. Bauroboter (1) nach einem der vorhergehenden Ansprüche, **dadurch gekennzeichnet, dass** die Fahreinheit (11) ein Fahrwerk (12) mit wenigstens zwei Kugeln, zwei Rollen, zwei Reifen (13) und/ oder eine Ketteneinheit, und eine Antriebseinheit (14) mit wenigstens einen Motor umfasst, wobei die Antriebseinheit (14) zum Antreiben wenigstens eines der Rollen, Reifen (13) und/ oder Ketteneinheiten ausgebildet ist.

5. Bauroboter (1) nach einem der vorhergehenden Ansprüche, **dadurch gekennzeichnet, dass** ein erstes Basisgelenk (41) an der ersten Verbindungsstrebe (40), ein zweites Basisgelenk (51) an der zweiten Verbindungsstrebe (50) und/ oder ein drittes Basisgelenk (61) an der dritten Verbindungsstrebe (60) als Gelenk mit drei Bewegungsfreiheitsgraden, insbesondere als sphärisches Gelenk, ausgebildet sind; oder dass ein erstes Basisgelenk (41) an der ersten Verbindungsstrebe (40), ein zweites Basisgelenk (51) an der zweiten Verbindungsstrebe (50) und/ oder ein drittes Basisgelenk (61) an der dritten Verbindungsstrebe (60) als Gelenk mit einem Bewegungsfreiheitsgrad, insbesondere als Scharniergelenk, ausgebildet sind.

6. Bauroboter (1) nach einem der vorhergehenden Ansprüche, **dadurch gekennzeichnet, dass** wenigstens ein erstes prismatisches Gelenk (43) der ersten Verbindungsstrebe (40) ein zweites prismatisches Gelenk (53) der zweiten Verbindungsstrebe (50) und/ oder ein drittes prismatisches Gelenk (63) der dritten Verbindungsstrebe (60) als Teleskopgelenk ausgebildet ist.

7. Bauroboter (1) nach einem der vorhergehenden Ansprüche, **dadurch gekennzeichnet, dass** ein erstes Funktionsplattformgelenk (42) an der ersten Verbindungsstrebe (40), ein zweites Verbindungsplattformgelenk (52) an der zweiten Verbindungsstrebe (50) und/ oder ein drittes Funktionsplattformgelenk (62) an der dritten Verbindungsstrebe (60) als Gelenk mit einem Bewegungsfreiheitsgrad, insbesondere als Scharniergelenk, ausgebildet ist; oder dass ein erstes Funktionsplattformgelenk (42) an der ersten Verbindungsstrebe (40), ein zweites Verbindungsplattformgelenk (52) an der zweiten Verbindungsstrebe (50) und/ oder ein drittes Funktionsplattformgelenk (62) an der dritten Verbindungsstrebe (60) als Gelenk mit drei Bewegungsfreiheitsgrade, insbesondere als sphärisches Gelenk, ausgebildet ist.

8. Bauroboter (1) nach einem der vorhergehenden Ansprüche, **dadurch gekennzeichnet, dass** das erste, zweite und/ oder prismatisches Gelenk (43, 53, 63) als aktives Gelenk ausgebildet ist.

9. Bauroboter (1) nach einem der vorhergehenden Ansprüche, **dadurch gekennzeichnet, dass** die Funktionsplattform (20) eine Befestigungsschnittstelle (21) aufweist und ein Endeffektor an der Befestigungsschnittstelle (21) angeordnet ist.

10. Bauroboter (1) nach einem der vorhergehenden Ansprüche, **dadurch gekennzeichnet, dass** die Funktionsplattform (20) wenigstens einen Aktuator umfasst, wobei der Aktuator ausgebildet ist, die Befestigungsschnittstelle (21) relativ zur Basis (10) zu bewegen, insbesondere relativ zur Funktionsplattform (20) zu drehen und/ oder zu neigen.

11. Bauroboter (1) nach einem der vorhergehenden Ansprüche, **dadurch gekennzeichnet, dass** der Bauroboter eine Markierung, insbesondere eine reflektierende Markierung und/ oder ein Identifikationselement, umfasst.

12. Bauroboter (1) nach einem der vorhergehenden Ansprüche, **dadurch gekennzeichnet, dass** der Bauroboter wenigstens einen Sensor, insbesondere einen Nivelliersensor, einen Neigungssensor, Positionssensor und/ oder eine Kamera, zur Steuerung des Bauroboters, insbesondere der Fahreinheit, eines aktiven Gelenks und/ oder des Endeffektors, aufweist.

13. Bauroboter (1) nach einem der vorhergehenden Ansprüche, **dadurch gekennzeichnet, dass** der Bauroboter (1) eine Steuerung (72) aufweist und dass der Bauroboter (1) wenigstens einen Aktuator zur Beaufschlagung des wenigstens einen aktiven Bewegungsfreiheitsgrats umfasst, wobei die Steuerung (72) eingerichtet ist, den wenigstens einen Aktor zu steuern.

14. Bauroboter (1) nach einem der vorhergehenden Ansprüche, **dadurch gekennzeichnet, dass** der Bauroboter (1) eine stabförmige erste Verbindungsstrebe (40), eine stabförmige zweite Verbindungsstrebe (50) und eine stabförmige dritte Verbindungsstrebe (60) aufweist, wobei ein erstes Funktionsplattformgelenk (42) der ersten Verbindungsstrebe (40), ein zweites Funktionsplattformgelenk (52) der zweiten Verbindungsstrebe (50) und ein drittes Funktionsplattformgelenk (62) der dritten Verbindungsstrebe (60) jeweils als Scharniergelenk mit einem Freiheitsgrad ausgebildet ist; ein erstes Basisgelenk (41) der ersten Verbindungsstrebe (40), ein zweites Basisgelenk (51) der zweiten Verbindungsstrebe (50) und ein drittes Basisgelenk (61) der dritten Verbindungsstrebe (60) jeweils als Kugelgelenk mit drei Freiheitsgraden ausgebildet ist; und ein erstes prismatisches Gelenk (43) der ersten Verbindungsstrebe (40) als erster Teleskopauszug (44) mit einem ersten Teleskopantrieb (45), ein zweites prismatisches Gelenk (53) der zweiten Verbindungsstrebe (50) als erster Teleskopauszug (54) mit einem ersten Teleskopantrieb (55) und ein drittes prismatisches Gelenk (63) der dritten Verbindungsstrebe (60) als dritter Teleskopauszug (64) mit einem dritten Teleskopantrieb (65) ausgebildet ist.

15. Bauroboter (1) nach einem der vorhergehenden Ansprüche, **dadurch gekennzeichnet, dass** der Bauroboter eine Hubvorrichtung (90) umfasst, wobei die Hubvorrichtung (90) die Funktionsplattform (20) mit der Basis (10) verbindet und die Hubvorrichtung (90) zum Vergrößern und/ oder Verkleinern der Distanz zwischen Basis (10) und Funktionsplattform (20) ausgebildet ist.

16. Bauroboter (1) nach Anspruch 15, **dadurch gekennzeichnet, dass** die Hubvorrichtung (90) ein aktives prismatisches Gelenk (43, 53, 63) aufweist, wobei die Länge der Hubvorrichtung (90) in einer Hublängsrichtung, welche sich durch eine Verbindungsstrecke zwischen Funktionsplattform (20) und der Basis (10) ergibt, insbesondere aktiv, variabel, veränderbar ist.

17. Bauroboter (1) nach einem der Ansprüche 15 oder 16, **dadurch gekennzeichnet, dass** die erste, zweite und dritte Verbindungsstrebe (40, 50, 60) aus einem flexiblen, langgestrecktem Material ausgebildet sind, die Hubvorrichtung (90) schwenkbar zu der Basis (10) innerhalb des durch das erste, zweite und dritte Basisgelenk (41, 51, 61) gebildete erste Dreieck (80) angeordnet ist und die Hubvorrichtung (90) schwenkbar an der Funktionsplattform (20) innerhalb des durch das erste, zweite und dritte Funktionsplattformgelenk (42, 52, 62) aufgespannte zweite Dreieck (81) angeordnet ist.

18. Bauroboter (1) nach einem der vorhergehenden Ansprüche, **dadurch gekennzeichnet, dass** die Hubvorrichtung (90) ausgebildet ist, eine Kraft von der Basis (10) entgegen der Funktionsplattform (20) in Längserstreckung der Hubvorrichtung (90) auszuüben.

19. Bauroboter (1) nach einem der Ansprüche 17 oder 18, **dadurch gekennzeichnet, dass** der Bauroboter (1) wenigstens eine Wickelvorrichtung (18a, 18b, 18c) umfasst, und die Wickelvorrichtung (18a, 18b, 18c) ausgebildet ist, die Länge der Längserstreckung der ersten, zweiten und/ oder dritten Verbindungsstrebe (40, 50, 60) zu verändern.
